# EUROPEAN PATENT APPLICATION

(11) **EP 4 521 202 A1**
(43) Date of publication of application: **12.03.2025**
(21) Application number: 23835667.9
(22) Date of filing: 01.05.2023
(51) Int. Cl.: G06F 3/01, G02B 27/01, G06F 3/0484, G06F 3/0481

(54) **ELECTRONIC DEVICE FOR SELECTION AND CONTROL OF OBJECT ON BASIS OF CLASSIFICATION, AND METHOD THEREOF**

(30) Priority: 08.07.2022 KR 20220084682
(71) Applicant: Samsung Electronics Co., Ltd., Suwon-si, Gyeonggi-do 16677 (KR)
(72) Inventor: KIM, Hyeonjin, Suwon-si Gyeonggi-do 16677 (KR); YOON, Haemi, Suwon-si Gyeonggi-do 16677 (KR); KIM, Hyunwoo, Suwon-si Gyeonggi-do 16677 (KR); CHO, Minji, Suwon-si Gyeonggi-do 16677 (KR)
(74) Representative: Appleyard Lees IP LLP
(86) International application number: PCT/KR2023/005930
(87) International publication number: WO 2024/010198

(57) **Abstract**

A processor of a wearable device, according to an embodiment, may be configured to identify, in response to an input indicating selection of a first external electronic device and a second external electronic device from among a plurality of external electronic devices shown on a display of the wearable device, third external electronic devices within a category comprising both the first external electronic device and the second external electronic device. This processor may be configured to interwork with at least one fourth external electronic device that is different from the first external electronic device and the second external electronic device, from among the third external electronic devices, and display at least one third visual object for guiding selection of the at least one fourth external electronic device.

## Description

### [Technical Field]

The following descriptions relate to an electronic device for selection and control of an object on a basis of classification and a method thereof.

### [Background Art]

In order to provide enhanced user experience, an electronic device that provides an augmented reality (AR) service displaying information generated by a computer in connection with an object in real-world is being developed. The electronic device may be a wearable device that may be worn by a user. For example, the electronic device may be AR glasses.

### [Disclosure]

### [Technical Solution]

A wearable device according to an embodiment may comprise a display and a processor. The processor may be configured to receive an input indicating selection of a first external electronic device, and a second external electronic device among a plurality of external electronic devices viewable through the display. The processor may be configured to, in response to the input, identify third external electronic devices in a category including both the first external electronic device, and the second external electronic device. The third external electronic devices may include the first external electronic device and the second external electronic device. The processor may be configured to display, as associated with the first external electronic device and the second external electronic device viewable through the display, a first visual object and a second visual object respectively indicating that the first external electronic device and the second external electronic device are selected. The processor may be configured to display, as associated with at least one fourth external electronic device among the third external electronic devices that is different from the first external electronic device and the second external electronic device, at least one third visual object guiding selection of the at least one fourth external electronic device.

A method of a wearable device according to an embodiment may comprise receiving a first input for selection of one or more first external electronic devices among a plurality of external electronic devices viewable through the display. The method may comprise, in response to the first input, identifying one or more first functions applicable to the one or more first external electronic devices. The method may comprise displaying, within the display, one or more visual objects for executing the one or more first functions. The method may comprise, in a state that the one or more visual objects are displayed, identifying, in response to a second input indicating selection of at least one second external electronic device, at least one second function applicable to the at least one second external electronic device. The method may comprise ceasing to, among the one or more visual objects, displaying at least one visual object with respect to a function different from the at least one second function. The wearable device according to an embodiment may provide a UI responding to a change in a user's selection for external electronic devices.

A method of a wearable device according to an embodiment may comprise receiving an input indicating selection of a first external electronic device, and a second external electronic device among a plurality of external electronic devices viewable through a display of the wearable device. The method may comprise, in response to the input, identifying third external electronic devices in a category including both the first external electronic device, and the second external electronic device. The third external electronic devices may include the first external electronic device, and the second external electronic device. The method may comprise displaying, as associated with the first external electronic device and the second external electronic device viewable through the display, a first visual object and a second visual object respectively indicating that the first external electronic device and the second external electronic device are selected. The method may comprise displaying, as associated with at least one fourth external electronic device among the third external electronic devices that is different from the first external electronic device and the second external electronic device, at least one third visual object guiding selection of the at least one fourth external electronic device.

A wearable device according to an embodiment may comprise a display and a processor. The processor may be configured to receive a first input indicating selection of one or more first external electronic devices among a plurality of external electronic devices viewable through the display. The processor may be configured to, in response to the first input, identify one or more first functions applicable to the one or more first external electronic devices. The processor may be configured to display, within the display, one or more visual objects for executing the one or more first functions. The processor may be configured to, in a state that the one or more visual objects are displayed, identify, in response to a second input indicating selection of at least one second external electronic device, at least one second function applicable to the at least one second external electronic device. The processor may be configured to cease to, among the one or more visual objects, displaying at least one visual object with respect to a function different from the at least one second function.

### [Description of the Drawings]

FIGS. 1A to 1B illustrate an example of a user interface (UI) in which a wearable device according to an embodiment displays based on a plurality of external electronic devices.
FIG. 2 illustrates an example of a block diagram of a wearable device according to an embodiment.
FIG. 3A illustrates an example of a perspective view of a wearable device according to an embodiment.
FIG. 3B illustrates an example of one or more hardware disposed in a wearable device according to an embodiment.
FIG. 4 illustrates an example of a category of external electronic devices in which a wearable device according to an embodiment identifies based on metadata.
FIGS. 5A to 5C illustrate an example of an operation in which a wearable device according to an embodiment receives an input indicating a connection between an external electronic device and the wearable device.
FIGS. 6A to 6B illustrate an example of an operation in which a wearable device according to an embodiment receives an input indicating selection of at least one of external electronic devices, based on a user's motion.
FIGS. 7A to 7B illustrate an example of an operation in which a wearable device according to an embodiment receives an input indicating selection of at least one of external electronic devices, based on a user's motion and speech.
FIGS. 8A to 8C illustrate an example of an operation in which a wearable device according to an embodiment displays a visual object for guiding selection of at least one external electronic device.
FIGS. 9A to 9B illustrate an example of a screen in which a wearable device according to an embodiment displays based on a category of an external electronic device selected by a user.
FIGS. 10A to 10C illustrate an example of a screen in which a wearable device according to an embodiment displays based on external electronic devices selected by a user.
FIG. 11 illustrates an example of a flowchart for describing an operation of a wearable device according to an embodiment.
FIGS. 12A to 12B illustrate an example of a flowchart for describing an operation of a wearable device according to an embodiment.
FIG. 13 illustrates an example of a flowchart for describing an operation of a wearable device according to an embodiment.
FIG. 14 illustrates an example of a flowchart for describing an operation of a wearable device according to an embodiment.
FIG. 15 illustrates an example of a flowchart for describing an operation of a wearable device according to an embodiment.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

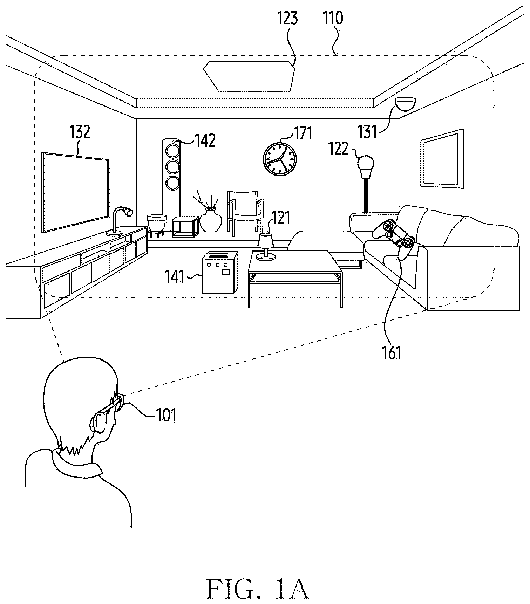

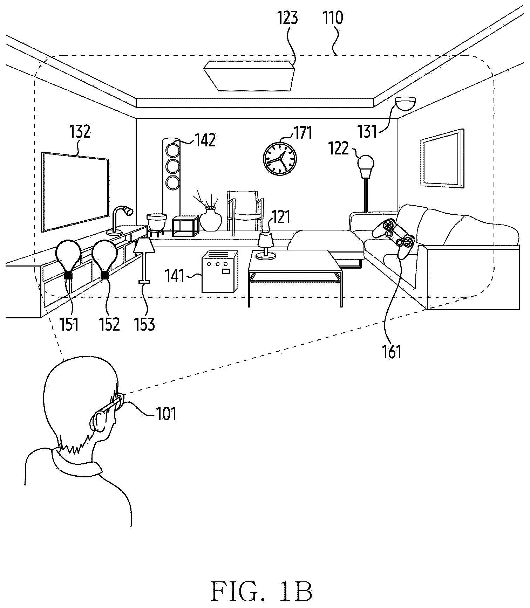

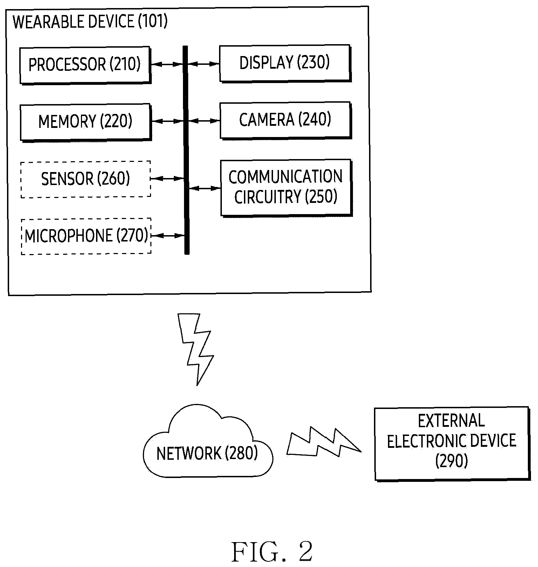

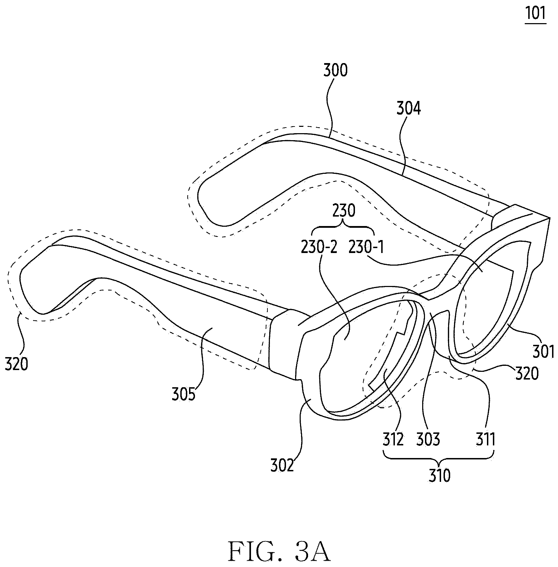

FIGS. 1A to 1B illustrate an example of a user interface (UI) in which a wearable device 101 according to an embodiment displays based on a plurality of external electronic devices 121, 122, 123, 131, 132, 141, 142, 161, and 171. Referring to FIGS. 1A and 1B, the wearable device 101 according to an embodiment may include a head-mounted display (HMD) wearable on a user's body part (e.g., head). For example, a housing of the wearable device 101 may include a flexible material, such as rubber and/or silicone, having a form in contact with a part (e.g., a part of a face covering both eyes) of the user's head. For example, the housing of the wearable device 101 may include one or more straps able to be twined around the user's head and/or one or more temples attachable to the ear of the head. An example of hardware included in the wearable device 101 according to an embodiment may be described with reference to FIG. 2. An example of a structure of the wearable device 101 according to an embodiment may be described with reference to FIGS. 3A to 3B.

The wearable device 101 according to an embodiment may communicate with one or more external electronic devices (e.g., external electronic devices 121, 122, 123, 131, 132, 141, 142, 161, and 171) different from the wearable device 101 through a wired network and/or a wireless network. The wired network may include a network such as the Internet, a local area network (LAN), a wide area network (WAN), Ethernet, or a combination thereof. The wireless network may include a network such as long term evolution (LTE), 5g new radio (NR), wireless fidelity (WiFi), Zigbee, near field communication (NFC), Bluetooth, Bluetooth low-energy (BLE), or a combination thereof. For example, the wearable device 101 may communicate with one or more external electronic devices through a server in a network. A signal and/or a packet exchanged between the wearable device 101 and the one or more external electronic devices may be relayed by the server. For example, the wearable device 101 may be directly connected to the one or more external electronic devices, independently of the server, by using Bluetooth, BLE, NFC, and/or WiFi direct (or Wi-Fi peer-to-peer (P2P)). For example, the wearable device 101 may be connected indirectly through one or more routers and/or an access point (AP) in the network.

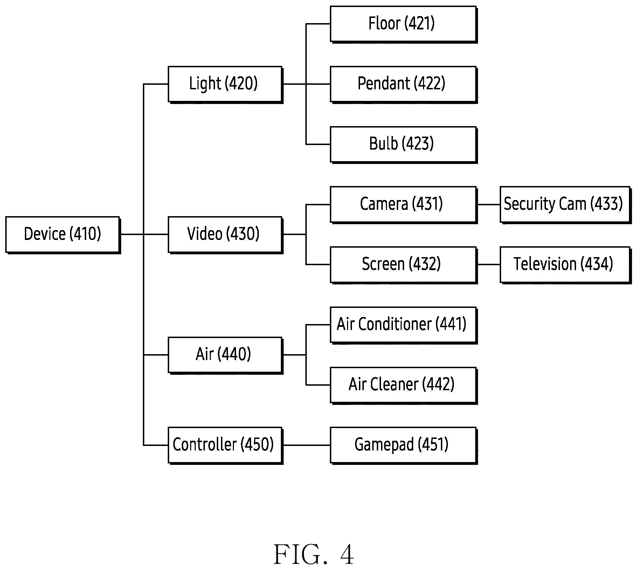

The external electronic devices 121, 122, 123, 131, 132, 141, 142, 161, and 171 of FIGS. 1A to 1B may be an example of an external electronic device accessible by the wearable device 101. The external electronic device accessible by the wearable device 101 may include an external electronic device physically separated from the wearable device 101, such as an internet of things (IoT) device. The wearable device 101 according to an embodiment may identify the external electronic device based on metadata of the external electronic device. Identifying the external electronic device by the wearable device 101 may include an operation of identifying at least one function supportable by the external electronic device, based on the metadata. The identifying the external electronic device by the wearable device 101 may include an operation of classifying the external electronic device based on hierarchical categories. Hereinafter, a category may be referred to as classification and/or a class. The hierarchical categories may be used to identify at least one functions commonly applicable to a plurality of external electronic devices. An operation in which the wearable device 101 according to an embodiment classifies at least one external electronic device accessible by the wearable device 101 based on the hierarchical categories will be described with reference to FIG. 4.

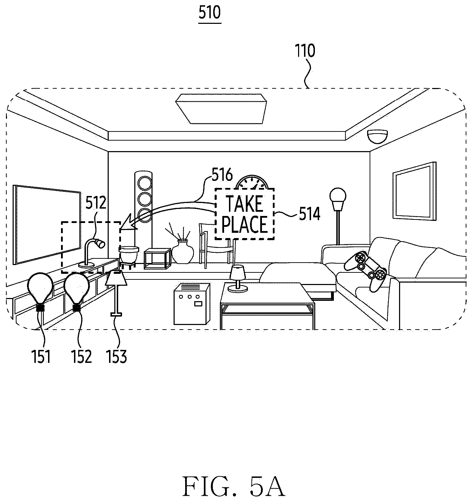

Referring to FIG. 1A, different examples of an external electronic device connected to the wearable device 101 are illustrated. Referring to FIG. 1A, the external electronic device accessible by the wearable device 101 may include lighting equipment (e.g., a bulb, a pendant, and/or a light stand) emitting light as controlled by the wearable device 101, such as the external electronic devices 121, 122, and 123. Referring to FIG. 1A, the external electronic device accessible by the wearable device 101 may include a surveillance camera transmitting a media content including a video captured by a camera, such as the external electronic device 131. Referring to FIG. 1A, the external electronic device accessible by the wearable device 101 may include a television including a display and/or a speaker for outputting media content, such as the external electronic device 132. Referring to FIG. 1A, the external electronic device accessible by the wearable device 101 may include an air cleaner, such as the external electronic device 141. Referring to FIG. 1A, the external electronic device accessible by the wearable device 101 may include an air conditioner, such as the external electronic device 142. Referring to FIG. 1A, the external electronic device accessible by the wearable device 101 may include a remote controller (e.g., a game pad, and/or a TV remote controller) for controlling other external electronic devices, such as the external electronic device 161. Referring to FIG. 1A, the external electronic device accessible by the wearable device 101 may include a watch, such as the external electronic device 171. An example of an operation in which the wearable device 101 according to an embodiment connects with the external electronic device will be described with reference to FIGS. 5A to 5C. The external electronic device is not limited to the above-described example, and may include an IoT device obtaining information indicating an environment based on a sensor.

The wearable device 101 according to an embodiment may execute a function related to augmented reality (AR). The wearable device 101 may include a display for displaying a screen related to the augmented reality. The display may include a transparent material. For example, based on the transparent material included in the display, light emitted toward a surface of the display may be at least partially penetrated to another surface opposite to the surface. The wearable device 101 according to an embodiment may display a screen related to an external object viewed to the user by penetrating the display within the display, based on the augmented reality. The wearable device 101 according to an embodiment may display information related to the external object to the user, based on the screen. The wearable device 101 according to an embodiment may display information which controls an external object such as the external electronic devices 121, 122, 123, 131, 132, 141, 142, 161, and 171, or is received electrically from the external object to the user by using the screen.

Referring to FIGS. 1A to 1B, an example of a field-of-view (FoV) 110 viewed to the user through the display of the wearable device 101 is illustrated. According to an embodiment, the wearable device 101 may identify the external electronic devices 121, 122, 123, 131, 132, 141, 142, 161, and 171 included in the FoV 110, based on object detection and/or object recognition. In order to perform the object detection and/or the object recognition, the wearable device 101 may include a camera for capturing an image and/or a video related to the FoV 110. A screen in which the wearable device according to an embodiment displays within the FoV 110 by using the display may include augmented or annotated information based on an environment viewed to the user.

FIG. 1B illustrates an example of a screen in which the wearable device 101 according to an embodiment displays within the FoV 110 by using the display. The wearable device 101 according to an embodiment may display visual objects 151, 152, and 153 indicating different external electronic devices within the FoV 110 by using a display. The visual objects 151, 152, and 153 may be displayed by the wearable device 101 to support selection and/or control of the external electronic device independently of a change of the FoV 110 due to a movement of the wearable device 101. The visual objects 151, 152, and 153 may be added by the user. Each of the visual objects 151, 152, and 153 may be related to any one of the external electronic devices 121, 122, 123, 131, 132, 141, 142, 161, and 171, and/or another external electronic device not included in the FoV 110.

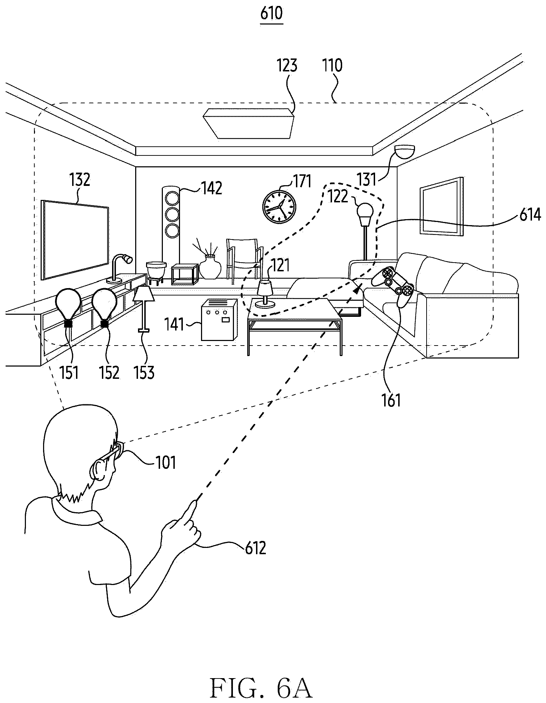

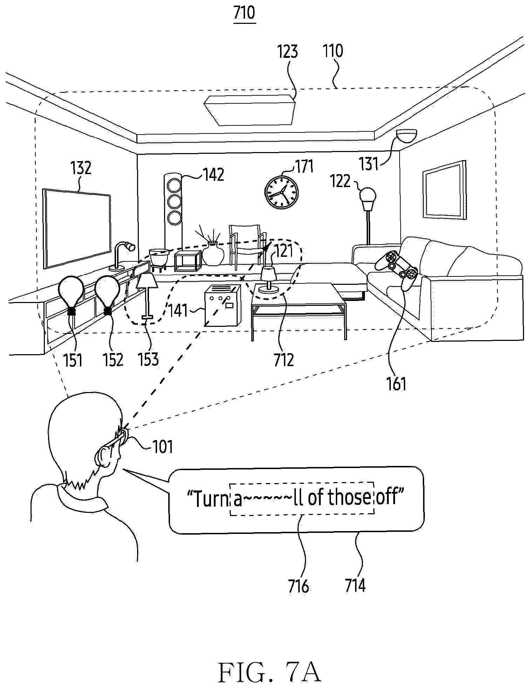

In a state of identifying the external electronic devices 121, 122, 123, 131, 132, 141, 142, 161, and 171, the wearable device 101 according to an embodiment may receive an input indicating selection of at least one of the external electronic devices 121, 122, 123, 131, 132, 141, 142, 161, and 171, and the visual objects 151, 152, and 153. The input may include an input selecting an external electronic device which is tangible and viewed through the FoV 100, such as the external electronic devices 121, 122, 123, 131, 132, 141, 142, 161, and 171, and/or another input indicating selection of an external electronic device by using a visual object representing the external electronic device, such as the visual objects 151, 152, and 153. By using homogeneity based on a category of each of the external electronic devices corresponding to the external electronic devices 121, 122, 123, 131, 132, 141, 142, 161, and 171, and the visual objects 151, 152, and 153 to the user, the wearable device 101 according to an embodiment may guide selection of a group of external electronic devices distinguished by the category. Exemplary operations in which the wearable device 101 receives the input are described with reference to FIGS. 6A to 6B and/or 7A to 7B.

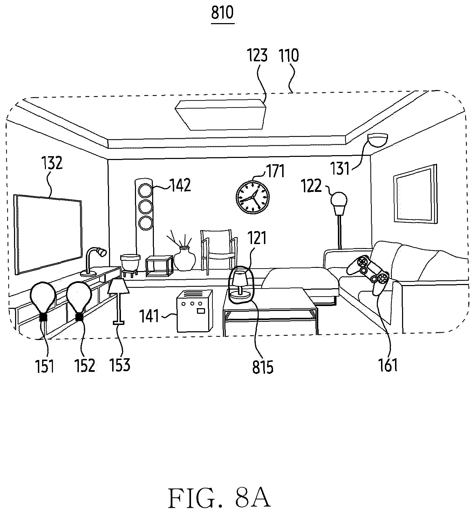

In an embodiment, in response to an input indicating selection of at least one of the external electronic devices 121, 122, 123, 131, 132, 141, 142, 161, and 171 and the visual objects 151, 152, and 153, the wearable device 101 may display one or more visual objects for guiding selection of another external electronic device, which is distinguished from at least one external electronic device selected by the input and is similar to at least one external electronic device selected by the input. The other external electronic device may be performed based on that the wearable device 101 classifies external electronic devices corresponding to the external electronic devices 121, 122, 123, 131, 132, 141, 142, 161, and 171, and the visual objects 151, 152, and 153 into the hierarchical categories. An example of an operation in which the wearable device 101 according to an embodiment displays the one or more visual object based on hierarchical categories will be described with reference to FIGS. 8A to 8C.

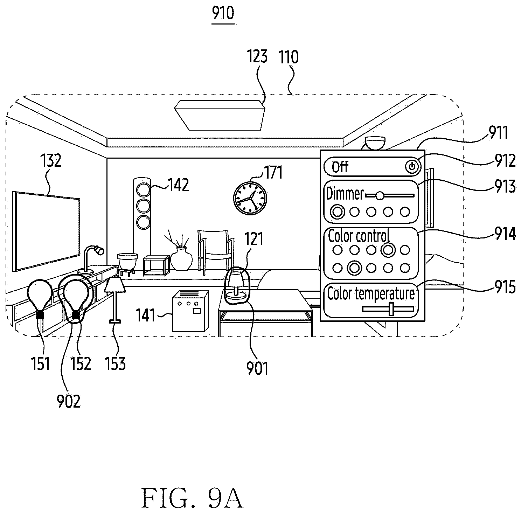

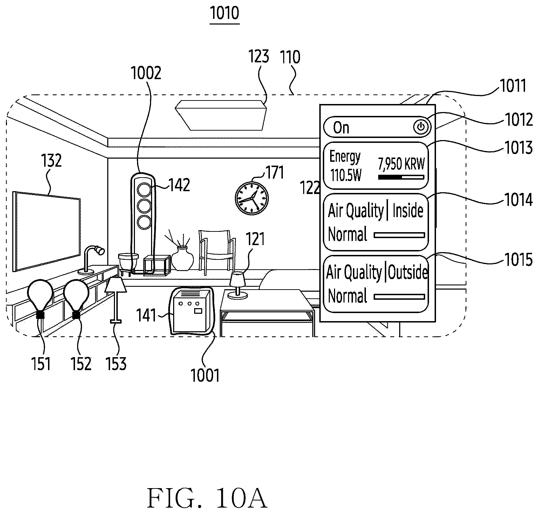

In an embodiment, in response to the input indicating selection of at least one of the external electronic devices 121, 122, 123, 131, 132, 141, 142, 161, and 171, and the visual objects 151, 152, and 153, the wearable device 101 may display a screen for controlling at least one external electronic device selected by the input. In a state in which a plurality of external electronic devices is selected by the input, the wearable device 101 may selectively and/or preferentially display functions commonly applicable to the plurality of external electronic devices selected by the input. An example of an operation in which the wearable device 101 according to an embodiment selectively displays the functions in the state will be described with reference to FIGS. 9A to 9B and/or FIGS. 10A to 10C.

As described above, the wearable device 101 according to an embodiment may receive an input indicating selection of at least two external electronic devices, based on the external electronic devices 121, 122, 123, 131, 132, 141, 142, 161, and 171, and the visual objects 151, 152, and 153 through the display. For example, the wearable device 101 may receive an input indicating selection of a first external electronic device and a second external electronic device. In response to the input, the wearable device 101 may identify third external electronic devices in a category including both the first external electronic device and the second external electronic device. The third external electronic devices may include the first external electronic device and the second external electronic device. The third external electronic devices may be identified from among other external electronic devices related to the external electronic devices 121, 122, 123, 131 132, 141, 142, 161, and 171, and the visual objects 151, 152, and 153. The wearable device 101 may display, as associated with the first external electronic device and the second external electronic device viewable through the display, first visual object and a second visual object respectively indicating that the first external electronic device and the second external electronic device are selected. The wearable device 101 may display, as associated with at least one fourth external electronic device among the third external electronic devices that is different from the first external electronic device and the second external electronic device, at least one third visual object guiding selection of the at least one fourth external electronic device.

As described above, the wearable device 101 according to an embodiment may support selection and/or control of one or more external electronic devices based on the external electronic devices 121, 122, 123, 131, 132, 141, 142, 161, and 171, and/or the visual objects 151, 152, and 153, which are viewable through the FoV 110. In response to an input indicating selection of a plurality of external electronic devices, the wearable device 101 may identify functions commonly applicable to the plurality of external electronic devices, or may identify information commonly receivable from the plurality of external electronic devices, by using metadata. Based on the commonly applicable functions, the wearable device 101 may control all the plurality of external electronic devices. Based on the commonly receivable information, the wearable device 101 may at least partially combine information received from each of the plurality of external electronic devices. The wearable device 101 may display the at least partially combined information to the user. For example, the wearable device 101 may improve a user experience related to the selection and/or the control of the plurality of external electronic devices.

Hereinafter, one or more hardware included in the wearable device 101 according to an embodiment will be described with reference to FIG. 2.

FIG. 2 illustrates an example of a block diagram of a wearable device 101 according to an embodiment. The wearable device 101 of FIG. 2 may be an example of the wearable device 101 of FIGS. 1A to 1B. Referring to FIG. 2, the wearable device 101 according to an embodiment may include at least one of a processor 210, memory 220, a display 230, a camera 240, communication circuitry 250, a sensor 260, or a microphone 270. The processor 210, the memory 220, the display 230, the camera 240, the communication circuitry 250, the sensor 260, and the microphone 270 may be electronically and/or operably coupled with each other by an electronic component, such as a communication bus. Hardware being coupled operably may mean that a direct connection or indirect connection between the hardware is established by wire or wirelessly, so that a specific hardware of the hardware is controlled by another hardware, and/or the other hardware is controlled by the specific hardware. A type and/or the number of the hardware included in the wearable device 101 is not limited to an example of FIG. 2.

The processor 210 of the wearable device 101 2 according to an embodiment may include a hardware component for processing data, based on one or more instructions. The hardware component for processing data may include, for example, an arithmetic and logic unit (ALU), a floating point unit (FPU), a field programmable gate array (FPGA), and/or a central processing unit (CPU). The number of the processors 210 may be one or more. For example, the processor 210 may have a structure of a multi-core processor such as a dual core, a quad core, or a hexa core.

The memory 220 of the wearable device 101 according to an embodiment may include a hardware component for storing data and/or instructions inputted to the processor 210 or outputted from the processor 210. The memory 220 may include, for example, volatile memory such as random-access memory (RAM), and/or non-volatile memory such as read-only memory (ROM). The volatile memory may include, for example, at least one of dynamic RAM (DRAM), static RAM (SRAM), Cache RAM, and pseudo SRAM (PSRAM). The non-volatile memory may include, for example, at least one of programmable ROM (PROM), erasable PROM (EPROM), electrically erasable PROM (EEPROM), flash memory, a hard disk, a compact disk, and an embedded multimedia card (eMMC).

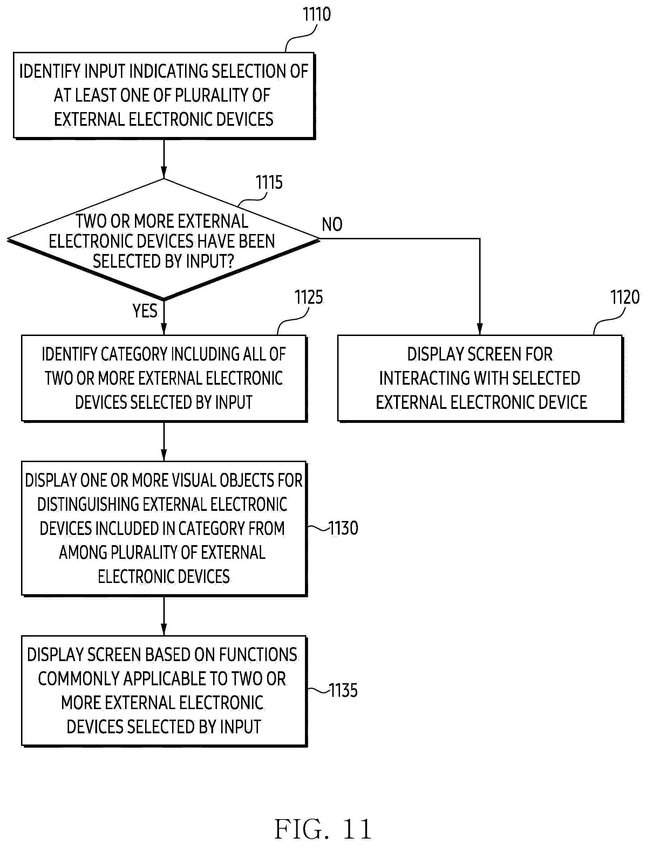

One or more instructions indicating a calculation and/or an operation to be performed on data by the processor 220, may be stored in the memory 220. A set of one or more instructions may be referred to as firmware, an operating system, a process, a routine, a sub-routine and/or an application. For example, the wearable device 101 and/or the processor 210 may perform at least one of operations of FIGS. 11 to 15 when a set of a plurality of instructions distributed in a form of an operating system, firmware, a driver, and/or an application is executed. Hereinafter, an application being installed in the wearable device 101 may mean that one or more instructions provided in a form of the application are stored in the memory 220 of the wearable device 101, and the one or more applications are stored in an executable format (e.g., a file having an extension preset by the operating system of the wearable device 101) by the processor 210 of the wearable device 101.

The display 230 of the wearable device 101 according to an embodiment may output visualized information (e.g., at least one of screens of FIGS. 5A to 5C, FIGS. 6A to 6B, FIGS. 7A to 7B, FIGS. 8A to 8C, FIGS. 9A to 9B, and/or FIGS. 10A to 10C) to the user. For example, the display 230 may output visualized information to the user by being controlled by a controller (e.g., a graphic processing unit (GPU)) such as the processor 210. The display 230 may include a flat panel display (FPD) and/or an electronic paper. The FPD may include a liquid crystal display (LCD), a plasma display panel (PDP), and/or one or more light emitting diodes (LEDs). The LED may include an organic LED (OLED). As described above with reference to FIGS. 1A to 1B, penetration of light may occur in at least a portion of the display 230 of the wearable device 101. The wearable device 101 may provide a user experience related to augmented reality to the user by providing a combination of light outputted through the display 230 and light penetrating the display 230.

The camera 240 of the wearable device 101 according to an embodiment may include one or more optical sensors (e.g., a charged coupled device (CCD) sensor and a complementary metal oxide semiconductor (CMOS) sensor) generating an electronic signal indicating a color and/or brightness of light. A plurality of optical sensors included in the camera 240 may be disposed in a form of a 2 dimensional array. The camera 240 may generate an image corresponding to light reaching the optical sensors of the 2 dimensional array and including a plurality of pixels arranged in two dimensions, by substantially simultaneously obtaining an electronic signal of each of the plurality of optical sensors. For example, photographic data captured by using the camera 240 may mean one image obtained from the camera 240. For example, video data captured by using the camera 240 may mean a sequence of a plurality of images obtained from the camera 240 according to a preset frame rate. The wearable device 101 according to an embodiment may further include a flashlight, which is disposed toward a direction in which the camera 240 receives light, for outputting light in the direction. The number of cameras 240 included in the wearable device 101 according to an embodiment may be one or more.

In an embodiment, a FoV of the camera 240, which is an area formed based on a view angle in which a lens of the camera 240 is capable of receiving light, may correspond to an area corresponding to an image generated by the camera 240. Hereinafter, a subject may mean an object included in the FOV of the camera 240, and distinguished from the wearable device 101. In an embodiment, the FoV of the camera 240 may at least partially match an environment viewable to the user through the display 230, such as the FoV 110 of FIGS. 1A to 1B.

Although not illustrated, the wearable device 101 according to an embodiment may include an output means for outputting information in a form other than a visualized form. For example, the wearable device 101 may include a speaker for outputting an acoustic signal. For example, the wearable device 101 may include a motor for providing haptic feedback based on a vibration.

The communication circuitry 250 of the wearable device 101 according to an embodiment may include hardware for supporting transmission and/or reception of an electronic signal between the wearable device 101 and an external electronic device 290. For example, the external electronic device 290 may include external electronic devices corresponding to each of the external electronic devices 121, 122, 123, 131, 132, 141, 142, 161, and 171, and/or the visual objects 151, 152, and 153 of FIGS. 1A to 1B. The communication circuitry 250 may include, for example, at least one of a modem (MODEM), an antenna, and an optic/electronic (O/E) converter. The communication circuitry 250 may support transmission and/or reception of an electronic signal based on various types of protocols such as Ethernet, a local area network (LAN), a wide area network (WAN), wireless fidelity (WiFi), Bluetooth, Bluetooth low energy (BLE), ZigBee, long term evolution (LTE), and 5G new radio (NR).

Referring to FIG. 2, an exemplary case in which the wearable device 101 according to an embodiment communicates with the external electronic device 290 through a network 280 is illustrated. For example, the wearable device 101 may identify the external electronic device 290 within the network 280 by using the communication circuitry 250. An embodiment is not limited thereto, and the wearable device 101 may be directly connected to the external electronic device 290 independently of the network 280 by using the communication circuitry 250.

Although illustrated based on different blocks, an embodiment is not limited thereto, a portion (e.g., at least one of the processor 210, the memory 220, and the communication circuitry 250) of the hardware component illustrated in FIG. 2 may be included in a single integrated circuit like a system on a chip (SoC).

The sensor 260 of the wearable device 101 according to an embodiment may generate electronic information to be processed by the processor 210 and/or the memory 220 from non-electronic information related to the wearable device 101. The electronic information generated by the sensor 260 may be stored in the memory 220, processed by the processor 210, and/or transmitted to an external electronic device distinguished from the wearable device 101.

According to an embodiment, the sensor 260 of the wearable device 101 may include at least one of a gyro sensor, a gravity sensor, and/or an acceleration sensor for detecting a posture of the wearable device 101 and/or a posture of a body part (e.g., a head) of a user wearing the wearable device 101. Each of the gravity sensor and the acceleration sensor may measure acceleration of gravity and/or acceleration based on preset three-dimensional axes (e.g., x-axis, y-axis, and z-axis) perpendicular to each other. The gyro sensor may measure angular velocity of each of the preset three-dimensional axes (e.g., x-axis, y-axis, and z-axis). The acceleration of the gravity, the acceleration, and the angular velocity measured in each of the gravity sensor, the acceleration sensor, and the gyro sensor may be outputted in a form of electronic information that is capable of being processed by the processor 210 and/or being stored in the memory 220. The gravity sensor, the acceleration sensor, and the gyro sensor may repeatedly output the acceleration of the gravity, the acceleration, and the angular velocity, based on a preset period. At least one of the gravity sensor, the acceleration sensor, and the gyro sensor may be referred to as an inertial measurement unit (IMU).

The microphone 270 of the wearable device 101 according to an embodiment may output an electronic signal representing a vibration of the atmosphere. For example, the wearable device 101 may obtain an audio signal including the user's speech by using the microphone 270. The user's speech included in the audio signal may be converted into information in a format recognizable by the processor 210 of the wearable device 101, based on a voice recognition model and/or a natural language understanding model. For example, the wearable device 101 may execute one or more functions from among a plurality of functions that may be provided by the wearable device 101, by recognizing the user's speech. An example of an operation in which the wearable device 101 according to an embodiment performs based on the speech received through the microphone 270 will be described with reference to FIGS. 7A to 7B.

As described above, the wearable device 101 according to an embodiment may include one or more hardware for providing a user experience based on augmented reality. For example, the wearable device 101 may identify the external electronic device 290 viewable through the display 230, by using the communication circuitry 250 and/or the camera 240. The wearable device 101 may display a screen for selecting and/or controlling the identified external electronic device 290 within the display 230. The wearable device 101 may receive an input indicating selection of the external electronic device 290, based on the sensor 260, the microphone 270, and/or the communication circuitry 250. Based on identifying selection of a plurality of external electronic devices by the input, the wearable device 101 may identify at least one function commonly applicable to the plurality of external electronic devices by using a hierarchical connection of categories assigned to each of the plurality of external electronic devices. The wearable device 101 may improve a user experience related to the control of the plurality of external electronic devices by displaying a screen for executing the at least one function to the user through the display 230.

Hereinafter, an example of a structure of the wearable device 101 according to an embodiment will be described with reference to FIGS. 3A to 3B.

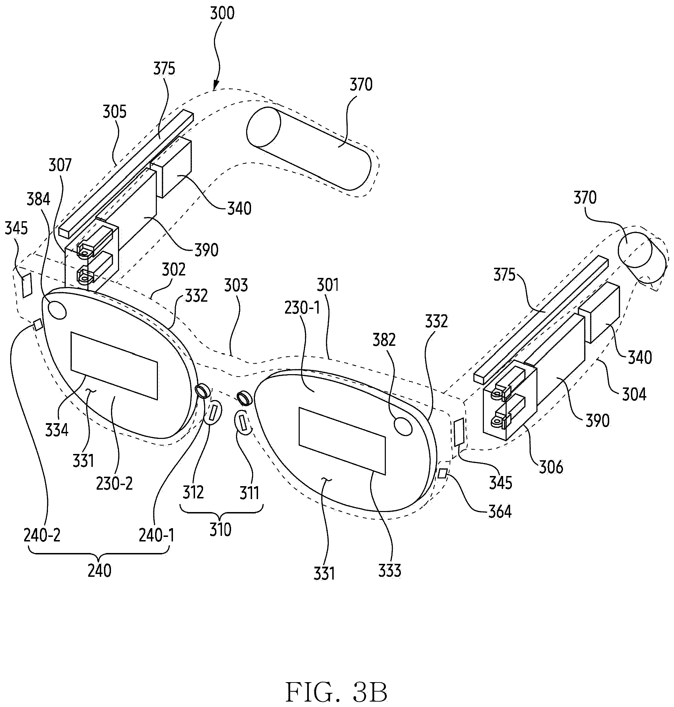

FIG. 3A illustrates an example of a perspective view of the wearable device 101 according to an embodiment. FIG. 3B illustrates an example of one or more hardware disposed in the wearable device 101 according to an embodiment. The wearable device 101 of FIGS. 3A to 3B may be an example of the wearable device 101 of FIGS. 1 and 2. Referring to FIG. 3A, the wearable device 101 according to an embodiment may include at least one display 230 ,and a frame 300 supporting the at least one display 230. The at least one display 230 may be an example of the display 230 of FIG. 2.

According to an embodiment, the wearable device 101 may be wearable on a portion of the user's body. The wearable device 101 may provide augmented reality (AR), virtual reality (VR), or mixed reality (MR) combining the augmented reality and the virtual reality to a user wearing the wearable device 101. For example, the wearable device 101 may display a virtual reality image provided from at least one optical device 382 and 384 on at least one display 230, in response to a user's preset gesture obtained through a motion recognition camera 240-2.

According to an embodiment, the at least one display 230 may provide visual information to a user. For example, the at least one display 230 may include a transparent or translucent lens. The at least one display 230 may include a first display 230-1 and/or a second display 230-2 spaced apart from the first display 230-1. For example, the first display 230-1 and the second display 230-2 may be disposed at positions corresponding to the user's left and right eyes, respectively.

Referring to FIG. 3B, the at least one display 230 may provide visual information transmitted through a lens included in at least one display 230 from ambient light to a user and other visual information distinguished from the visual information. For example, the at least one display 230 may include a first surface 331 and a second surface 332 opposite to the first surface 331. A display area may be formed on the second surface 332 of at least one display 230. When the user wears the wearable device 101, ambient light may be transmitted to the user by being incident on the first surface 331 and being penetrated through the second surface 332. For another example, the at least one display 230 may display an augmented reality image in which a virtual reality image provided by the at least one optical device 382 and 384 is combined with a reality screen transmitted through ambient light, on a display area formed on the second surface 332. The at least one display 230 may include at least one waveguide 333 and 334 that transmits light transmitted from the at least one optical device 382 and 384 by diffracting to the user. The wearable device 101 may analyze an object included in a real image collected through a photographing camera (not illustrated) (e.g., the camera 240 of FIG.2), combine with a virtual object corresponding to an object that become a subject of augmented reality provision among the analyzed object, and display on the at least one display 230. The virtual object may include at least one of text and images for various information associated with the object included in the real image. The user wearing the wearable device 101 may watch an image displayed on the at least one display 230.

According to an embodiment, a frame 300 may be configured with a physical structure in which the wearable device 101 may be worn on the user's body. According to an embodiment, the frame 300 may be configured so that when the user wears the wearable device 101, the first display 230-1 and the second display 230-2 may be positioned corresponding to the user's left and right eyes. The frame 300 may support the at least one display 230. For example, the frame 300 may support the first display 230-1 and the second display 230-2 to be positioned at positions corresponding to the user's left and right eyes.

Referring to FIG. 3A, according to an embodiment, the frame 300 may include an area 320 at least partially in contact with the portion of the user's body in case that the user wears the wearable device 101. For example, the area 320 of the frame 300 in contact with the portion of the user's body may include an area in contact with a portion of the user's nose, a portion of the user's ear, and a portion of the side of the user's face that the wearable device 101 contacts. According to an embodiment, the frame 300 may include a nose pad 310 that is contacted on the portion of the user's body. When the wearable device 101 is worn by the user, the nose pad 310 may be contacted on the portion of the user's nose. The frame 300 may include a first temple 304 and a second temple 305 that is contacted on another portion of the user's body that is distinct from the portion of the user's body.

For example, the frame 300 may include a first rim 301 surrounding at least a portion of the first display 230-1, a second rim 302 surrounding at least a portion of the second display 230-2, a bridge 303 disposed between the first rim 301 and the second rim 302, a first pad 311 disposed along a portion of the edge of the first rim 301 from one end of the bridge 303, a second pad 312 disposed along a portion of the edge of the second rim 302 from the other end of the bridge 303, the first temple 304 extending from the first rim 301 and fixed to a portion of the wearer's ear, and the second temple 305 extending from the second rim 302 and fixed to a portion of the ear opposite to the ear. The first pad 311 and the second pad 312 may be in contact with the portion of the user's nose, and the first temple 304 and the second temple 305 may be in contact with a portion of the user's face and the portion of the user's ear. The temples 304 and 305 may be rotatably connected to the rim through hinge units 306 and 307. The first temple 304 may be rotatably connected with respect to the first rim 301 through the first hinge unit 306 disposed between the first rim 301 and the first temple 304. The second temple 305 may be rotatably connected with respect to the second rim 302 through the second hinge unit 307 disposed between the second rim 302 and the second temple 305.

According to an embodiment, the wearable device 101 may include hardware (e.g., hardware described above based on the block diagram of FIG. 2) that performs various functions. For example, the hardware may include a battery module 370, an antenna module 375, the at least one optical device 382 and 384, a sound output module (not illustrated), a light emitting module (not illustrated), and/or a printed circuit board (PCB) 390. Various hardware may be disposed in the frame 300.

According to an embodiment, the at least one optical device 382 and 384 may project a virtual object on the at least one display 230 in order to provide various image information to the user. For example, the at least one optical device 382 and 384 may be a projector. The at least one optical device 382 and 384 may be disposed adjacent to the at least one display 230 or may be included in the at least one display 230 as a portion of the at least one display 230. According to an embodiment, the wearable device 101 may include a first optical device 382 corresponding to the first display 230-1, and a second optical device 384 corresponding to the second display 230-2. For example, the at least one optical device 382 and 384 may include the first optical device 382 disposed at a periphery of the first display 230-1 and the second optical device 384 disposed at a periphery of the second display 230-2. The first optical device 382 may transmit light to the first waveguide 333 disposed on the first display 230-1, and the second optical device 384 may transmit light to the second waveguide 334 disposed on the second display 230-2.

In various embodiments, a camera 240 (e.g., the camera 240 of FIG. 2) may include a photographing camera, an eye tracking camera (ET CAM) 240-1, and/or a motion recognition camera 240-2. The photographing camera, the eye tracking camera 240-1, and the motion recognition camera 240-2 may be disposed at different positions on the frame 300 and may perform different functions.

The photographing camera may photograph a real image or background to be matched with a virtual image in order to implement the augmented reality or mixed reality content. The photographing camera may photograph an image of a specific object existing at a position (e.g., the FoV 110 of FIGS. 1A to 1B)) viewed by the user and may provide the image to the at least one display 230. The at least one display 230 may display one image in which a virtual image provided through the at least one optical device 382 and 384 is overlapped with information on the real image or background including an image of the specific object obtained by using the photographing camera. In an embodiment, the photographing camera may be disposed on the bridge 303 disposed between the first rim 301 and the second rim 302.

The eye tracking camera 240-1 may implement a more realistic augmented reality by matching the user's gaze with the visual information provided on the at least one display 230, by tracking the gaze of the user wearing the wearable device 101. For example, when the user looks at the front, the wearable device 101 may naturally display environment information associated with the user's front on the at least one display 230 at a position where the user is positioned. The eye tracking camera 240-1 may be configured to capture an image of the user's pupil in order to determine the user's gaze. For example, the eye tracking camera 240-1 may receive gaze detection light reflected from the user's pupil and may track the user's gaze based on the position and movement of the received gaze detection light. In an embodiment, the eye tracking camera 240-1 may be disposed at a position corresponding to the user's left and right eyes. For example, the eye tracking camera 240-1 may be disposed in the first rim 301 and/or the second rim 302 to face the direction in which the user wearing the wearable device 101 is positioned.

The motion recognition camera 240-2 may provide a specific event to the screen provided on the at least one display 230 by recognizing the movement of the whole or portion of the user's body, such as the user's torso, hand, or face. The motion recognition camera 240-2 may obtain a signal corresponding to motion by recognizing the user's motion (e.g., gesture recognition), and may provide a display corresponding to the signal to the at least one display 230. The processor may identify a signal corresponding to the operation and may perform a preset function based on the identification. In an embodiment, the motion recognition camera 240-2 may be disposed on the first rim 301 and/or the second rim 302.

According to an embodiment, the battery module 370 may supply power to electronic components of the wearable device 101. In an embodiment, the battery module 370 may be disposed in the first temple 304 and/or the second temple 305. For example, the battery module 370 may be a plurality of battery modules 370. The plurality of battery modules 370, respectively, may be disposed on each of the first temple 304 and the second temple 305. In an embodiment, the battery module 370 may be disposed at an end of the first temple 304 and/or the second temple 305.

The antenna module 375 may transmit the signal or power to the outside of the wearable device 101 or may receive the signal or power from the outside. The antenna module 375 may be electrically and/or operably connected to the communication circuit 250 of FIG. 2. In an embodiment, the antenna module 375 may be disposed in the first temple 304 and/or the second temple 305. For example, the antenna module 375 may be disposed close to one surface of the first temple 304 and/or the second temple 305.

The sound output module (not illustrated) may output a sound signal to the outside of the wearable device 101. The sound output module may be referred to as a speaker. In an embodiment, the sound output module may be disposed in the first temple 304 and/or the second temple 305 in order to be disposed adjacent to the ear of the user wearing the wearable device 101. For example, the sound output module may include a first sound output module disposed adjacent to the user's left ear by being disposed in the first temple 304, and a second sound output module disposed adjacent to the user's right ear by being disposed in the second temple 305.

The light emitting module (not illustrated) may include at least one light emitting element. The light emitting module may emit light of a color corresponding to a specific state or may emit light through an operation corresponding to the specific state in order to visually provide information on a specific state of the wearable device 101 to the user. For example, when the wearable device 101 requires charging, it may emit red light at a constant cycle. In an embodiment, the light emitting module may be disposed on the first rim 301 and/or the second rim 302.

As described above, the wearable device 101 according to an embodiment may identify a motion of the user's head and/or gaze, or may receive the user's speech. The wearable device 101 may execute a function requested by the user, in response to the motion and/or the speech. The function performed by the wearable device 101 based on the motion and/or the speech may include a function of controlling an external electronic device (e.g., the external electronic device 290 of FIG. 2) different from the wearable device 101. The function performed by the wearable device 101 based on the motion and/or the speech may include a function of receiving information from the external electronic device. The wearable device 101 according to an embodiment may identify one or more functions supportable by the external electronic device, by using metadata indicating a capability of the external electronic device.

Hereinafter, an example of an operation in which the wearable device 101 according to an embodiment identifies one or more external electronic devices based on metadata will be described with reference to FIG. 4.

FIG. 4 illustrates an example of categories 410, 420, 421, 422, 423, 430, 431, 432, 433, 434, 440, 441, 442, 450, and 451 of external electronic devices in which a wearable device according to an embodiment identifies based on metadata. The wearable device of FIG. 4 may be an example of the wearable device 101 of FIGS. 1 to 3.

The wearable device according to an embodiment may obtain metadata on at least one external electronic device through communication circuitry (e.g., the communication circuitry 250 of FIG. 2). The metadata may include one or more files indicating data on at least one external electronic device based on a format such as an extensible markup language (XML) and/or javascript object notation (JSON). For example, metadata on a specific external electronic device may be stored in a single file having a preset extension.

In an embodiment, the wearable device may obtain the metadata by communicating with a server in a network (e.g., the network 280 of FIG. 2). The server may search for metadata to be transmitted to the wearable device, based on a user account logged in the wearable device. The searched metadata may be related to, for example, an external electronic device previously registered in the user account. The server may transmit the searched metadata to the wearable device.

In an embodiment, based on identifying an external electronic device directly connected to an AP connected with the wearable device, the wearable device may obtain metadata from the identified external electronic device. The wearable device may establish a communication link based on Bluetooth, WiFi, and/or an NFC with the external electronic device, based on a marker attached to the external electronic device, such as a quick response (QR) code. The wearable device may obtain metadata from the external electronic device by using the communication link.

The wearable device according to an embodiment may identify at least one external electronic device based on metadata. For example, the metadata may include data related to the at least one external electronic device. For example, the wearable device may identify at least one of a type, a vendor, a name, an address in a network (e.g., an IP address, and/or a MAC address), and a location (e.g., GPS coordinate) of an external electronic device corresponding to metadata by using the metadata. For example, the wearable device may identify one or more functions applicable to the external electronic device by using the metadata. For example, the wearable device may identify obtainable data from the external electronic device by using the metadata. For example, the wearable device may identify at least one category including the external electronic device by using the metadata.

The wearable device according to an embodiment may identify one or more categories in which an external electronic device is included, in hierarchical categories, based the metadata. The categories 410, 420, 421, 422, 423, 430, 431, 432, 433, 434, 440, 441, 442, 450, and 451 may be an example of the hierarchical categories. Referring to FIG. 4, an example in which the categories 410, 420, 421, 422, 423, 430, 431, 432, 433, 434, 440, 441, 442, 450, and 451are connected based on a tree structure is illustrated, but an embodiment is not limited thereto.

The category 410 of FIG. 4 is the highest category of the hierarchical categories, and may indicate a universal set of external electronic devices capable of being connected to the wearable device. The categories 420, 421, 422, 423, 430, 431, 432, 433, 434, 440, 441, 442, 450, and 451 are subcategories of the category 410, which is highest category, and may indicate a partial set of external electronic devices by being connected directly or indirectly to the category 410. The wearable device according to an embodiment may classify the external electronic device in the categories 410, 420, 421, 422, 423, 430, 431, 432, 433, 434, 440, 441, 442, 450, and 451, based on metadata on the external electronic device. Classifying the external electronic device by the wearable device may mean selecting the lowest category in which the external electronic device is included, from among the categories 410, 420, 421, 422, 423, 430, 431, 432, 433, 434, 440, 441, 442, 450, and 451. The wearable device may identify one or more categories related to an external electronic device, based on one or more higher categories sequentially connected to the selected lowest category. For example, the one or more categories related to the external electronic device may include one or more categories connecting between the category 410, which is highest category, and the selected lowest category.

Referring to FIG. 4, the category 420 connected to the highest category 410 may be a category for classifying external electronic devices for providing a function related to lighting. Categories 421, 422, and 423 may be included in the category 420, based on a form and/or a function of the external electronic devices classified into the category 420. For example, the category 421 may be a category for classifying stand-alone lighting equipment, such as a floor lamp. For example, the category 422 may be a category for classifying lighting equipment fixed to a ceiling, such as a pendant lamp. For example, the category 423 may be a category for classifying lighting equipment detachable to a socket, such as a bulb. Although only the categories 421, 422, and 423 are illustrated as a subcategory of the category 420, an embodiment is not limited thereto.

Referring to FIG. 4, the category 430 may be a category for classifying external electronic devices for providing a function related to a video and/or an image. The category 431 is a subcategory of the category 430, and may be a category for classifying external electronic devices for capturing a video and/or an image. The category 433 is a subcategory of the category 431, and may be a category for classifying a surveillance camera, such as a security camera and/or a CCTV camera. The category 432 is a subcategory of the category 430, and may be a category for classifying external electronic devices for displaying a video and/or an image. The category 434 may be a category for classifying a television.

Referring to FIG. 4, the category 440 may be a category for classifying external electronic devices for providing a function related to air. The category 441 is a subcategory of the category 440, and may be a category for classifying an air conditioner. The category 442 is a subcategory of the category 440, and may be a category for classifying an air cleaner.

Referring to FIG. 4, the category 450 may be a category for classifying a controller for providing a function for controlling an external electronic device. The category 451 is a subcategory of the category 450, and may be a category for classifying a controller such as a game pad.

Hereinafter, an exemplary operation in which the wearable device according to an embodiment classifies the external electronic devices 121, 122, 123, 131, 132, 141, 142, 161, and 171 of FIGS. 1A to 1B, based on the categories 410, 420, 421, 422, 423, 430, 431, 432, 433, 434, 440, 441, 442, 450, and 451 described above with reference to FIG. 4 will be described.

For example, the wearable device may classify the external electronic device 121 of FIGS. 1A to 1B, which is stand-alone lighting equipment, into the category 421 of FIG. 4. The wearable device may classify the external electronic device 122 of FIGS. 1A to 1B, which is a bulb connected to the socket, into the category 423 of FIG. 4. The wearable device may classify the external electronic device 123 of FIGS. 1A to 1B, which is lighting equipment installed on a ceiling, into the category 422 of FIG. 4. For example, the wearable device may classify external electronic devices corresponding to the visual objects 151 and 152 of FIG. 1B into the category 423 corresponding to the bulb of FIG. 4. The wearable device may classify an external electronic device corresponding to the visual object 153 of FIG. 1B into the category 421 corresponding to the stand-alone lighting equipment of FIG. 4. The external electronic devices 121, 122, and 123 of FIGS. 1A to 1B may be classified into the different lowest categories 421, 422, and 423, within the category 420 of FIG. 4.

For example, the wearable device may classify the external electronic device 131 of FIGS. 1A to 1B, which is a surveillance camera, into the category 433 of FIG. 4. The wearable device may classify the external electronic device 132 of FIGS. 1A to 1B, which is a television, into the category 434 of FIG. 4. Although it is classified into the different lowest categories 433 and 434, the external electronic devices 131 and 132 of FIGS. 1A to 1B may be classified into the categories 430 in terms of providing a function related to a video and/or an image.

For example, the wearable device may classify the external electronic device 141 of FIGS. 1A to 1B, which is an air cleaner, into the category 442 of FIG. 4. The wearable device may classify the external electronic device 142 of FIGS. 1A to 1B, which is an air conditioner, into the category 441 of FIG. 4. The wearable device may classify the external electronic device 161 of FIGS. 1A to 1B, which is a game pad, into the category 451 of FIG. 4.

The wearable device according to an embodiment may identify at least one function provided by a specific external electronic device, based on metadata and/or the hierarchical categories (e.g., the categories 410, 420, 421, 422, 423, 430, 431, 432, 433, 434, 440, 441, 442, 450, and 451). For example, the wearable device may identify a first set of functions applicable to the external electronic device 122 of FIGS. 1A to 1B, which is a bulb, based on the category 423. For example, the wearable device may identify a second set of functions applicable to the external electronic device 121 of FIGS. 1A to 1B, which is stand-alone lighting equipment, based on the category 421. For example, the wearable device may display a screen for execution of functions applicable to a specific external electronic device in response to an input indicating selection of the specific external electronic device.

In an embodiment, the wearable device may receive an input indicating selection of a plurality of external electronic devices. The wearable device may use the hierarchical categories to interact with a plurality of external electronic devices selected by the input. For example, the hierarchical categories (e.g., the categories 410, 420, 421, 422, 423, 430, 431, 432, 433, 434, 440, 441, 442, 450, and 451) in which the wearable device uses to classify external electronic devices may be used to identify homogeneity of the external electronic devices. For example, the wearable device may identify a function common to the plurality of external electronic devices based on the hierarchical categories, in response to the input indicating selection of the plurality of external electronic devices. For example, each of the hierarchical categories may indicate a function commonly applicable to external electronic devices included in a category.

For example, in response to an input indicating selection of all of the external electronic devices 121 and 122 of FIGS. 1A and 1B, the wearable device may identify the first set and the second set of functions applicable to each of the external electronic devices 121 and 122, based on the categories 423 and 421 of FIG. 4 in which each of the external electronic devices 121 and 122 is classified. Intersection of the first set and the second set may include functions commonly applicable to the external electronic devices 121 and 122 of FIGS. 1A to 1B as an element. The wearable device according to an embodiment may display a screen for execution of at least one function included in the intersection, in response to the input.

An exemplary operation of the wearable device based on the intersection of sets of functions applicable to each of the plurality of external electronic devices has been described, but an embodiment is not limited thereto. For example, in response to the input indicating selection of the plurality of external electronic devices, the wearable device may identify the lowest category including all of the plurality of external electronic devices within hierarchical categories. Like the example, in a state of receiving an input indicating selection of all of the external electronic devices 121 and 122 of FIG. 1A to 1B, the wearable device may identify a higher category of each of the categories 423 and 421 of FIG. 4 in which each of the external electronic devices 121 and 122 is classified. Referring to FIG. 4, the category 420 including all of the categories 423 and 421 may be a lowest category from among the categories 410 and 420 including all the categories 423 and 421. The wearable device may identify at least one function commonly applicable to the external electronic devices 121 and 122 selected by the input, based on the category 420.

The wearable device according to an embodiment may guide a user's selection based on homogeneity of external electronic devices, based on the hierarchical categories. For example, in response to an input of selecting at least two external electronic devices, the wearable device may guide selection of another external electronic device different from the external electronic devices, based on union or a higher category of categories corresponding to each of the external electronic devices selected by the input. Like the example, in a state of receiving the input indicating selection of all of the external electronic devices 121 and 122 of FIGS. 1A to 1B, the wearable device may identify another external electronic device included in a higher category of each of the categories 423 and 421 of FIG. 4 in which each of the external electronic devices 121 and 122 is classified. The other external electronic device may include, for example, an external electronic device included in the category 420 that is a higher category of the categories 421 and 423 of FIG. 4, such as the external electronic device 123 of FIGS. 1A to 1B. Within the example, the wearable device may guide additional selection of the external electronic device 123 of FIGS. 1A to 1B.

As described above, the wearable device according to an embodiment may obtain hierarchical categories (e.g., the categories 410, 420, 421, 422, 423, 430, 431, 433, 434, 441, 442, 450, and 451) for classifying a plurality of external electronic devices, based on metadata on the plurality of external electronic devices connected to the wearable device. Based on the hierarchical categories, the wearable device may identify at least one function applicable common to the external electronic devices. For example, in addition to a function of turning on or off external electronic devices, the wearable device may identify another function commonly applicable to the external electronic devices. The wearable device may support the user to collectively control the plurality of external electronic devices in addition to the function of turning on or off the plurality of external electronic devices, by displaying a screen for execution of the other function.

Hereinafter, an operation of receiving an input indicating that the wearable device according to an embodiment adds an external electronic device will be described with reference to FIGS. 5A to 5C.

FIGS. 5A to 5C illustrate an example of an operation in which a wearable device according to an embodiment receives an input indicating a connection between an external electronic device and the wearable device. The wearable device of FIGS. 5A to 5C may be an example of the wearable device 101 of FIGS. 1A to 1B and/or the wearable device of FIGS. 2 to 4. For example, the wearable device 101 of FIG. 1 may include the wearable device of FIGS. 5A to 5C. For example, a FoV 110 of FIGS. 5A to 5C may correspond to the FoV 110 of FIGS. 1A to 1B.

The wearable device according to an embodiment may identify one or more external electronic devices included in the FoV 110 by using a camera (e.g., the camera 240 of FIG. 2). For example, the wearable device may identify the one or more external electronic devices included in the FoV 110, based on object detection and/or object recognition. The wearable device may extract one or more feature points from an image of the FoV 110 obtained from the camera. The wearable device may identify the one or more external electronic devices based on the one or more feature points. The wearable device may identify the one or more external electronic devices by using a neural network trained to identify an external electronic device from the image.

The wearable device according to an embodiment may receive an input for notifying a location of at least one external electronic device (e.g., an external electronic device 512) within the FoV 110. For example, the wearable device may obtain the location of the external electronic device from a user, independently of the object detection and/or the object recognition. Hereinafter, an operation in which the wearable device according to an embodiment identifies a location of the external electronic device 512 based on a user input will be described with reference to FIGS. 5A to 5C.

In a state 510 of FIG. 5A, the wearable device may display a visual object 514 for receiving a location of the external electronic device 512, superimposed within the FoV 110. The external electronic device 512 may be identified by the wearable device through communication circuitry (e.g., the communication circuitry 250 of FIG. 2) in the state 510 and/or before the state 510. The visual object 514 may be displayed within a display (e.g., the display 230 of FIG. 2) at least partially superimposed with the FoV 110. The wearable device may display a translucent visual object 514 based on a preset alpha value. The wearable device may display preset text (e.g., "take place") for guiding that the location of the external electronic device 512 may be selected within the visual object 514. The visual object 514 may be referred to as an anchor for selecting an external electronic device or selecting a location of the external electronic device.

The wearable device according to an embodiment may receive an input for moving the visual object 514. For example, the wearable device may receive the input based on a user's motion to be described later with reference to FIGS. 6A to 6B. For example, the wearable device may receive the input based on a user's speech to be described later with reference to FIGS. 7A to 7B. In the state 510 of FIG. 5A, the wearable device may receive an input indicating a movement of the visual object 514 along a path 516. For example, the user may move the visual object 514, so that the visual object 514 may be superimposed on the external electronic device 512 included in the FoV 110.

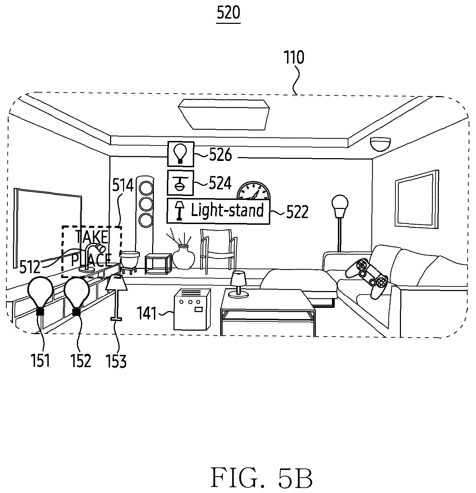

A state 520 of FIG. 5B may be a state after the wearable device receives the input indicating the movement of the visual object 514. Referring to FIG. 5B, in response to the input, the wearable device may display options 522, 524, and 526 for selecting a type of the external electronic device 512. For example, the options 522, 524, and 526 may be displayed by the wearable device to receive a category of the external electronic device 512 superimposed with the visual object 514 within the FoV 110 from the user.

Referring to FIG. 5B, the option 522 may include an icon for receiving an input indicating that the external electronic device 512 is classified as stand-alone lighting equipment (e.g., the lighting equipment classified into the category 421 of FIG. 4). The option 524 may include an icon for receiving an input indicating that the external electronic device 512 is lighting equipment (e.g., the lighting equipment classified into the category 422 of FIG. 4) fixed to the ceiling. The option 526 may include an icon for receiving an input indicating that the external electronic device 512 is a light bulb (e.g., the lighting equipment classified into the category 423 of FIG. 4).

In an embodiment, in response to an input indicating selection of any one of the options 522, 524, and 526, the wearable device may classify the external electronic device 512 into at least one of the hierarchical categories. Hereinafter, it is assumed that the wearable device has received an input indicating selection of the option 522 from the user in the state 520 of FIG. 5B.

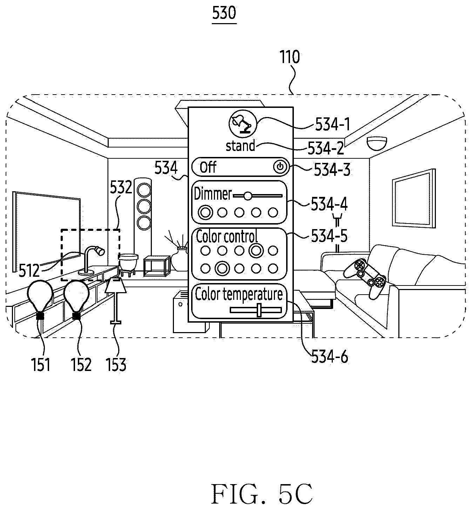

A state 530 of FIG. 5C may be a state in which the wearable device displays a screen 534 for controlling the external electronic device 512 after identifying the external electronic device 512 based on the states 510 and 520 of FIGS. 5A to 5B. For example, in response to an input indicating selection of the external electronic device 512, the wearable device may display a visual object 532 to indicate that the external electronic device 512 is selected, in response to the input. Referring to FIG. 5C, an example of the visual object 532 based on a rectangular line is illustrated, but an embodiment is not limited thereto. For example, the visual object 532 may have a shape of an outline of the external electronic device 512. For example, the visual object 532 may have a shape of a polygon that at least partially overlaps the external electronic device 512.

The wearable device according to an embodiment may display the screen 534 on at least a portion of the FoV 110, in response to an input indicating selection of the external electronic device 512. The wearable device may display one or more functions applicable to the external electronic device 512 selected by the input within the screen 534. The one or more functions applicable to the external electronic device 512 may be identified based on metadata on the external electronic device 512 and/or one or more categories in which the external electronic device 512 is included.

Referring to FIG. 5C, the wearable device may display an icon 534-1 and/or text 534-2 for indicating the type of the external electronic device 512 within the screen 534. The wearable device may display a button 534-3 for toggling the external electronic device 512 between an active state and an inactive state within the screen 534. The wearable device may display a visual object 534-4 such as a slider for adjusting the amount of light of the external electronic device 512 within the screen 534. The wearable device may display a visual object 534-5 such as a palette for adjusting a color of light outputted from the external electronic device 512 within the screen 534. The wearable device may display a visual object 534-6 such as a slider for adjusting a color temperature within the screen 534. The wearable device according to an embodiment may control the external electronic device 512 in response to an input based on the screen 534. For example, the wearable device may transmit a signal indicating the input to the external electronic device 512, in response to the input.

Although an exemplary operation of the wearable device related to the external electronic device 512 has been described, an embodiment is not limited thereto. For example, based on an input indicating selection of another external electronic device that is viewable through the FoV 110 and different from the external electronic device 512, the wearable device may display a screen for executing functions applicable to the other external electronic device, similar to the screen 534. For example, in response to an input indicating selection of at least one of the visual objects 151, 152, and 153 superimposed on at least a portion of the FoV 110, the wearable device may display a screen for executing functions applicable to at least one external electronic device corresponding to at least one visual object selected by the input.

As described above, the wearable device according to an embodiment may display a UI for controlling an external electronic device, such as the screen 534, based on an input indicating selection of the external electronic device. In response to the input based on the UI, the wearable device may transmit a signal for controlling the external electronic device. When the number of external electronic devices selected by the user increases to two or more, the wearable device may display functions commonly applicable to external electronic devices selected by the user, by changing the UI. Meanwhile, the wearable device may guide the user additional selection of an external electronic device, based on homogeneity of external electronic devices selected by the user.

Hereinafter, exemplary operations of receiving an input indicating that a wearable device according to an embodiment selects two or more external electronic devices will be described with reference to FIGS. 6A to 6B and/or 7A to 7B.

FIGS. 6A to 6B illustrate an example of an operation in which a wearable device 101 according to an embodiment receives an input indicating selection of at least one of external electronic devices, based on a user's motion. The wearable device 101 of FIGS. 6A to 6B may be an example of the wearable device 101 of FIG. 1, and the wearable device of FIGS. 2 to 4 and/or FIGS. 5A to 5C. For example, the wearable device 101 of FIG. 1 may include the wearable device 101 of FIGS. 6A to 6B. A FoV 110 of FIGS. 6A to 6C may include the FoV 110 of FIGS. 1A to 1B.

States 610 and 620 of FIGS. 6A to 6B may be a state during which the wearable device has entered a mode (e.g., a multi-selection mode) for receiving an input indicating selection of one or more external electronic devices. For example, the wearable device may enter the mode in response to an input (e.g., long-press) pressing the wearable device by exceeding preset duration, or an input (e.g., double-tap) tapping the wearable device at a preset number (e.g., two times) within preset duration.

FIG. 6A illustrates an exemplary state 610 in which the wearable device 101 according to an embodiment identifies a motion of a user's body part (e.g., a hand 612). The wearable device 101 may obtain an image including the hand 612 by using a camera (e.g., the camera 240 of FIG. 2). The wearable device 101 may obtain data indicating the motion of the hand 612, based on a change in a position and/or a size of the hand 612 within the obtained image. The data may include a path of the hand 612 and/or a finger included in the hand 612.

The wearable device 101 according to an embodiment may receive an input indicating selection of one or more external electronic devices, based on a path of a body part such as the hand 612. In a state 610 of FIG. 6A, the wearable device 101 may display a visual object 614 for indicating the path of the hand 612 within the FoV 110. The visual object 614 may indicate a path tracked based on a line while the wearable device tracks the path of the hand 612. The wearable device 101 according to an embodiment may select external electronic devices 121 and 122 included in a path within the FoV 110, based on identifying the path having a shape of a closed curve such as the visual object 614. For example, the motion of the hand 612 moving along the path having the shape of the closed curve, such as the visual object 614, may be a gesture for selecting the external electronic devices 121 and 122.

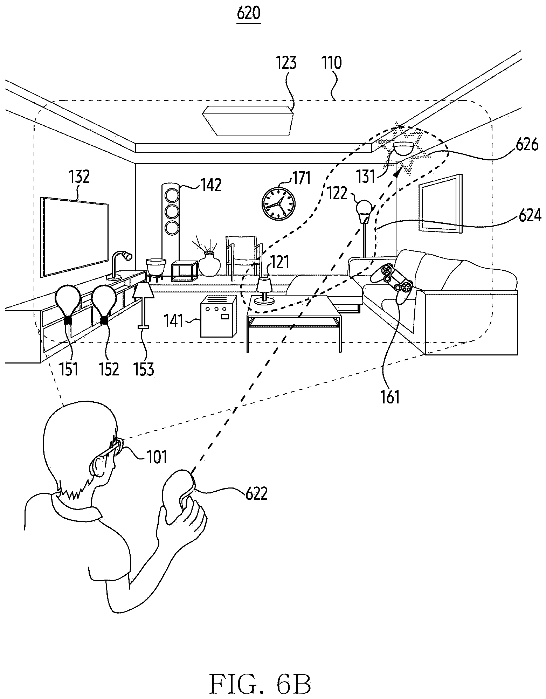

FIG. 6B illustrates an exemplary state 620 in which the wearable device 101 according to an embodiment receives an input indicating selection of at least one external electronic device, based on an external electronic device such as a pointing device 622. The pointing device 622 may be connected to the wearable device 101 by wire or wirelessly to receive the user's gesture wearing the wearable device 101. The user may control the wearable device 101 by moving the pointing device 622 or pressing a button of the pointing device 622. For example, the pointing device 622 may be an electronic device for remotely controlling another electronic device (e.g., the wearable device 101) different from the pointing device 622, such as the category 450 of FIG. 4.

The wearable device 101 according to an embodiment may receive an input detected by the pointing device 622 and indicating selection of at least one external electronic device. Referring to FIG. 6B, the wearable device 101 may display a visual object 624 indicating a path of the pointing device 622. The wearable device 101 may receive an input indicating selection of external electronic devices 121, 122, and 131 included in a closed curve within the FoV 110, based on the visual object 624 having a shape of the closed curve.

The wearable device 101 may receive not only an input indicating selection of a plurality of external electronic devices by using the pointing device 622 and/or the hand 612, but also an input indicating exclusion of at least one of the plurality of pre-selected external electronic devices. For example, the wearable device 101 may identify a motion of the pointing device 622 moving along a path of a visual object 626 after receiving a first input indicating selection of the external electronic devices 121, 122, and 131, such as the visual object 624. The wearable device 101 may receive a second input indicating exclusion of the external electronic device 131 specified by the path of the visual object 626, based on the motion of the pointing device 622 moving along the path of the visual object 626. After sequentially receiving the first input and the second input, the wearable device 101 may determine that the external electronic devices 121 and 122 are selected by the user.

As described above, the wearable device 101 according to an embodiment may receive an input indicating selection of one or more external electronic devices, based on the motion of the user's hand 612. The wearable device 101 may identify functions commonly applicable to a plurality of external electronic devices, based on identifying that the plurality of external electronic devices are selected by the input. The wearable device 101 identifying the functions commonly applicable to the plurality of external electronic devices may be performed based on hierarchical categories (e.g., the categories of FIG. 4). The wearable device 101 may support the user to collectively control of the plurality of external electronic devices based on the functions, by displaying the identified functions within the FoV 110.

The wearable device 101 receiving an input indicating selection of the external electronic devices is not limited to exemplary operations of FIGS. 6A to 6B. Hereinafter, an operation in which the wearable device 101 according to an embodiment receives an input indicating selection of external electronic devices, based on a motion of the wearable device 101 and/or a user's speech will be described with reference to FIGS. 7A to 7B.

FIGS. 7A to 7B illustrate an example of an operation in which a wearable device 101 according to an embodiment receives an input indicating selection of at least one of external electronic devices, based on a user's motion and speech. The wearable device 101 of FIG. 1 may include the wearable device 101 of FIGS. 7A to 7B. The wearable device 101 of FIGS. 7A to 7B may be an example of the wearable device of FIGS. 2 to 4 and 5A to 5C, and/or the wearable device 101 of FIGS. 6A to 6B. Similar to the states 610 and 620 of FIGS. 6A and 6B, states 710 and 720 of FIGS. 7A to 7B may be a state during which the wearable device has entered a mode for receiving an input indicating selection of one or more external electronic devices.

The wearable device 101 according to an embodiment may include a sensor (e.g., the sensor 260 of FIG. 2) to track an eye gaze and/or a motion of a head of the user wearing the wearable device 101. The wearable device 101 may include a microphone (e.g., the microphone 270 of FIG. 2) to receive an audio signal. The wearable device 101 may extract a speech 714 from the audio signal. The wearable device 101 extracting the speech 714 from the audio signal may be performed, based on an algorithm and/or a neural network for speech-to-text (STT).

The wearable device 101 according to an embodiment may identify a preset keyword from the audio signal. For example, the wearable device 101 may identify a preset keyword in the speech 714. The preset keyword may include a demonstrative pronoun, such as a keyword 716 of FIG. 7A. The wearable device 101 may identify a motion (e.g., a change in the user's eye gaze and/or a motion of the user's head) of the user wearing the wearable device 101, in response to identifying a noun for selecting one or more external electronic devices from the speech 714, such as the demonstrative pronoun.

Referring to FIG. 7A, in response to identifying a preset keyword (e.g., the keyword 716) from the audio signal, the wearable device may receive an input indicating selection of at least one external electronic device, based on a time section in which the preset keyword is identified, the user's eye gaze detected by the sensor, and/or the motion of the user's head. For example, the wearable device 101 may obtain data indicating the user's eye gaze and/or the motion of the wearable device 101 within the time section in which the keyword 716 is received. The wearable device 101 may display a visual object 712, superimposed within the FoV 110, based on the data obtained within the time section. For example, the visual object 712 may indicate a path of the wearable device 101 by the user's eye gaze and/or the motion of the user's head within the time section.

The wearable device 101 according to an embodiment may receive an input indicating selection of one or more external electronic devices, based on the visual object 712 indicating the received motion within the time section in which the keyword 716 is received. For example, the wearable device 101 may determine an external electronic device 121 and an external electronic device corresponding to a visual object 153, which are included in a closed curve indicated by the visual object 712 within the FoV 110, as external electronic devices selected by the user.

The wearable device 101 according to an embodiment may collectively control external electronic devices selected by the keyword 716 within the speech 714, based on another keyword that is included in the speech 714 and different from the keyword 716. Referring to FIG. 7A, in response to receiving the speech 714 such as "turn all of those off", the wearable device 101 may identify not only a keyword (e.g., "all of those") for selecting external electronic devices within the speech 714, but also a keyword (e.g., "turn off") for selecting a function to be commonly applied to the external electronic devices. For example, in response to receiving the speech 714, the wearable device 101 may collectively turn off the external electronic devices (e.g., the external electronic device 121, and the external electronic device corresponding to the visual object 153) selected by the keyword 716 within the speech 714.

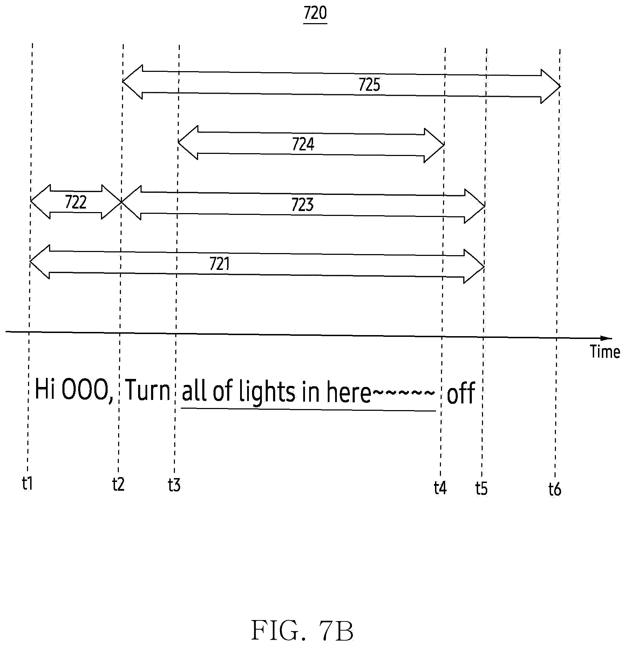

FIG. 7B illustrates an example of a timing diagram 720 indicating a function in which the wearable device 101 according to an embodiment executes based on keywords included in a speech while identifying the speech (e.g., the speech 714 of FIG. 7A) from an audio signal. The wearable device 101 may obtain text from the audio signal based on the STT. The wearable device 101 may execute a specific function in response to identifying a keyword indicating the specific function (e.g., a function of selecting the one or more external electronic devices described above with reference to FIG. 7A) within the text.

Referring to FIG. 7B, the wearable device 101 may obtain text indicating a speech from the audio signal, from a time point t1. For example, the wearable device 101 may perform conversion (e.g., STT) between the speech and the text within a time section 721 starting from the time point t1. Referring to FIG. 7B, a preset keyword notifying the start of a voice command for controlling the wearable device 101 may be identified within a time section 722 between the time point t1 and a time point t2. For example, the preset keyword notifying the start of the voice command may be "Hi bixby" or may include text (e.g., "Hi (text)") inputted by the user.

Referring to FIG. 7B, the wearable device 101 may obtain text indicating the voice command continued after the preset keyword from the time point t2, based on identifying the preset keyword within the time section 722. For example, the wearable device 101 may obtain the voice command from the audio signal within a time section 723 after the time point t2. A time section 725 after the time point t2 may be a time section in which the wearable device 101 performs an operation indicated by the voice command.

Referring to FIG. 7B, the wearable device 101 may identify a keyword indicating selection of one or more external electronic devices, such as a demonstrative pronoun, from the text, within a time section 724 between a time point t3 and a time point t4. Within the time section 724, the wearable device 101 may detect the user's motion, as described above with reference to FIG. 7A. The wearable device 101 may identify one or more external electronic devices based on the detected motion.

Referring to FIG. 7B, within the time section 723 of receiving the voice command, the wearable device 101 may identify a function to be executed by one or more external electronic devices selected by the time section 724, based on a keyword identified within a remaining time section (e.g., a time section between the time point t2 to the time point t3, and a time section between the time point t4 to a time point t5) excluding the time section 724 of receiving the demonstrative pronoun. For example, the wearable device 101 may transmit a signal for deactivation to one or more external electronic devices selected based on the time section 724, in response to identifying a preset keyword for the deactivation of the external electronic device within the remaining time section, such as "turn off". In response to the signal, the one or more external electronic devices may be collectively deactivated. Transmitting the signal by the wearable device 101 may be performed after the time point t5 within the time section 725.

Although an embodiment for identifying a speech in English has been described, the embodiment is not limited thereto. For example, the wearable device 101 may control one or more external electronic devices connected to the wearable device 101 based on a speech in Korean, such as " 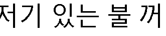 !(Turn all of those off!)".

As described above, the wearable device 101 according to an embodiment may receive an input that indicates selection of one or more external electronic devices and collective control of the selected one or more external electronic devices by using an audio signal and a user's motion. The wearable device 101 may collectively control the one or more external electronic devices based on the input. Although an operation in which the wearable device 101 collectively deactivates the external electronic devices based on the user's speech has been described, an embodiment is not limited thereto. The wearable device 101 may transmit a signal to execute a function corresponding to text to a plurality of external electronic devices, in response to identifying the text from the user's speech, wherein the text corresponds to any one of functions commonly applicable to a plurality of external electronic devices selected by the user.

Hereinafter, referring to FIGS. 8A to 8C, an operation in which a wearable device 101 according to an embodiment guides selection of another external electronic device similar to external electronic devices selected by a user, based on the external electronic devices selected the user's motion and/or speech described above with reference to FIGS. 6A to 6B and/or 7A to 7B will be described.

FIGS. 8A to 8C illustrate an example of an operation in which a wearable device according to an embodiment displays a visual object for guiding selection of at least one external electronic device. The wearable device 101 of FIG. 1 may include the wearable device of FIGS. 8A to 8C. The wearable device of FIGS. 8A to 8C may be an example of the wearable device of FIGS. 2 to 4, and 5A to 5C, and/or the wearable device 101 of FIGS. 6A to 6B, and 7A to 7B.

FIG. 8A exemplarily illustrates a state 810 after the wearable device according to an embodiment receives an input indicating selection of an external electronic device 121 within a FoV 110. The input may be received based on processing of the user's motion and/or speech described above with reference to FIGS. 6A to 6B and/or 7A to 7B. In response to the input indicating the selection of the external electronic device 121, the wearable device may display a visual object 815, superimposed on the external electronic device 121 within the FoV 110. An example in which the wearable device displays the visual object 815 having a shape of an outline within the FoV 110 of the external electronic device 121 is illustrated, but an embodiment is not limited thereto. For example, the visual object 815 may have a shape and/or color for emphasizing the external electronic device 121 within the FoV 110.

In the state 810 of displaying the visual object 815 of FIG. 8A, the wearable device may receive an input indicating selection of another external electronic device different from the external electronic device 121 corresponding to the visual object 815. For example, the wearable device may receive an input indicating selection of the other external electronic device (e.g., external electronic devices corresponding to each of external electronic devices 122, 123, 131, 132, 141, 142, 161, and 171, and visual objects 151, 152, and 153) excluding the external electronic device 121.

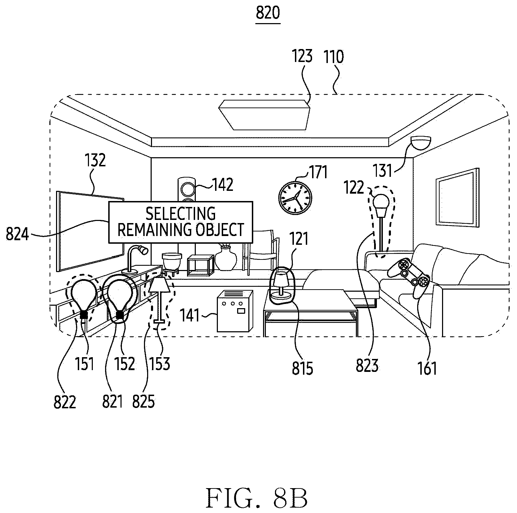

A state 820 of FIG. 8B may exemplarily illustrate a state after receiving the input indicating selection of the visual object 152 in the state 810 of FIG. 8A. The wearable device according to an embodiment may visualize that the visual object 152 is selected, in response to an input indicating selection of the visual object 152. For example, the wearable device may indicate that the visual object 152 is selected, by displaying the visual object 821, superimposed on the visual object 152.

In the state 820 of FIG. 8B, the wearable device according to an embodiment may display at least one visual object (e.g., visual objects 822, 823, and 824) guiding selection of another external electronic device similar to a plurality of external electronic devices (e.g., the external electronic device 121 and an external electronic device corresponding to the visual object 152) selected by the user. Based on identifying that the plurality of external electronic devices (e.g., the external electronic device 121 and the external electronic device corresponding to the visual object 152) have been selected by the user, the wearable device may identify a category of each of the plurality of external electronic devices. For example, the wearable device may identify a category (e.g., the category 421) of the external electronic device 121 on which the visual object 815 is superimposed, from among the hierarchical categories of FIG. 4. The wearable device may identify a category (e.g., the category 423) of the external electronic device on which the visual object 152 is superimposed.

The wearable device according to an embodiment may identify external electronic devices (e.g., an external electronic device that is homogeneous with the external electronic devices selected by the user) within a category including all the external electronic devices selected by the user. For example, the external electronic devices identified by the wearable device may be union of categories in which each of the external electronic devices selected by the user is classified. For example, the external electronic devices identified by the wearable device may be identified based on a higher category that the categories have in common.

In an embodiment of FIG. 8B in which the external electronic device 121 and an external electronic device corresponding to the visual object 152 are selected by the user, the wearable device may identify other external electronic devices classified into the categories 421 and 423 of FIG. 4. For example, the wearable device may identify another external electronic device (e.g., an external electronic device corresponding to the visual object 153 and the external electronic device 122) classified into the same category as the external electronic device 121 selected by the user. For example, the wearable device may identify another external electronic device (e.g., an external electronic device corresponding to the visual object 151 and the external electronic devices 122) classified into the same category as the external electronic device corresponding to the visual object 152 selected by the user.

The wearable device according to an embodiment may display a visual object indicating another external electronic device (e.g., an external electronic device that is homogeneous with external electronic devices selected by the user) similar to external electronic devices selected by the user. The wearable device may display the visual object, as associated with the other external electronic device. The visual object may be displayed based on a different shape and/or a color from the visual objects 815 and 821 displayed as associated with the external electronic devices selected by the user, to guide selection of the other external electronic device.

Referring to FIG. 8B, the wearable device may display a visual object 825, as associated with another external electronic device (e.g., an external electronic device corresponding to the visual object 153) classified into the same category as the external electronic device 121 selected by the user. The visual object 815 displayed as associated with the external electronic device 121 may be displayed based on a first type indicating that it is selected by the user. Meanwhile, the visual object 825 displayed as associated with the visual object 153 may be displayed, based on a second type, which is different from the first type, for guiding the user's additional selection.

Referring to FIG. 8B, the wearable device may display the visual objects 823 and 822 by superimposing with another electronic device (e.g., the external electronic devices 122 and an external electronic device corresponding to the visual object 151) classified into the same category as an electronic device that is selected by the user and corresponds to the visual object 152. The wearable device according to an embodiment may emphasize other electronic devices similar to the external electronic devices selected by the user within the FoV 110, by displaying the visual objects 822, 823, and 825 together with the visual objects 815, and 821. The wearable device according to an embodiment may display the visual object 824 for selecting all the other external electronic devices. The visual object 824 may include preset text (e.g., "selecting a remaining object") for guiding selection of all the other external electronic devices.

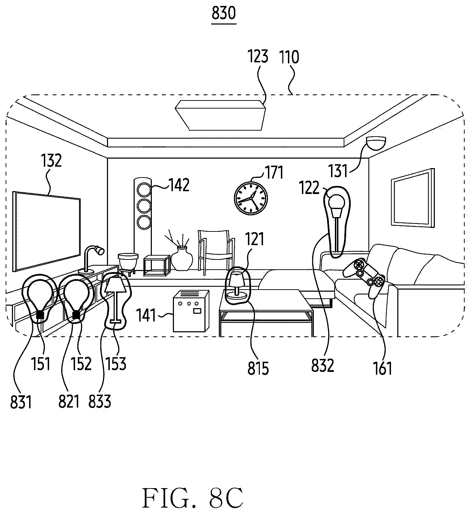

A state 830 of FIG. 8C may exemplarily illustrate a state after receiving an input indicating the selection of the visual object 824 in the state 820 of FIG. 8B. In response to the input, the wearable device may replace the visual objects 822, 823, and 825, which were displayed for guiding the user's selection in the state 820 of FIG. 8B with visual objects 831, 832, and 833 for indicating that it is selected by the user. In the state 830 of FIG. 8C, the wearable device may determine that all of the external electronic devices 121 and 122 and external electronic devices corresponding to the visual objects 151, 152, and 153 are selected by the user.

As described above, the wearable device according to an embodiment may display the first type of the visual objects 815 and 821 indicating that the plurality of external electronic devices is selected, based on the input indicating the selection of the plurality of external electronic devices. While displaying the first type of visual objects 815, and 821, the wearable device may display a visual object (e.g., the visual objects 822, 823, 824, and 825), which is different from the first type, for guiding selection of another external electronic device that is homogeneous with the plurality of external electronic devices. The wearable device may notify the user of another external electronic device that is homogeneous with the plurality of external electronic devices, or may guide selection of the other external electronic device, by using a visual object different from the first type.

Hereinafter, referring to FIGS. 9A to 9B and/or 10A to 10C, an example of an operation in which a wearable device displays a screen for execution of functions commonly applicable to a plurality of external electronic devices selected by a user or visualizes data obtained from the plurality of external electronic devices will be described.

FIGS. 9A to 9B illustrate an example of a screen in which a wearable device according to an embodiment displays based on a category of an external electronic device selected by a user. The wearable device 101 of FIG. 1 may include the wearable device of FIGS. 9A to 9B. The wearable device of FIGS. 9A to 9B may be an example of the wearable device of FIGS. 2 to 4, and 5A to 5C, and/or the wearable device 101 of FIGS. 6A to 6B, 7A to 7B, and 8A to 8C.

FIG. 9A exemplarily illustrates a state 910 in which the wearable device displays a screen 911 in response to an input indicating selection of an external electronic device 121 and an external electronic device corresponding to a visual object 152. The input may be received based on the user's motion and/or speech described above with reference to FIGS. 6A to 6B and/or 7A to 7B. In response to the input, the wearable device may display visual objects 901 and 902 for indicating external electronic devices (e.g., the electronic device 121 and the electronic device corresponding the visual object 152) selected by the user, as associated with the external electronic devices.

In the state 910 of FIG. 9A, the wearable device may identify functions commonly applicable to the external electronic devices selected by the user. For example, the wearable device may identify the functions commonly applicable to the external electronic devices, based on metadata of external electronic devices selected by the user and/or categories of each of the external electronic devices. The wearable device according to an embodiment may display the screen 911 for executing functions commonly applicable to the external electronic devices within the FoV 110.

Referring to FIG. 9A, the wearable device according to an embodiment may display visual objects 912, 913, 914, and 915 for executing the functions commonly applicable to the external electronic devices selected by the user within the screen 911. For example, the wearable device may display a button, such as the visual object 912, for activating or deactivating the external electronic devices collectively within the screen 911. Based on that all the external electronic devices selected by the user supports an adjustment of the amount of light by the user, the wearable device may display the visual object 913 including a slider for adjusting the amount of light of all the external electronic devices within the screen 911. The wearable device may display the visual object 914 including a palette for adjusting colors of all the external electronic devices within the screen 911. The wearable device may display a list of one or more colors commonly supported by the external devices within the visual object 914. The wearable device may display the visual object 915 for adjusting a color temperature of all the external electronic devices within the screen 911. In the state 910 of FIG. 9A, the wearable device may display the visual objects 913, 914, and 915 for collective adjust of the amount of light, the color, and the color temperature, based on identifying that all the external electronic devices selected by the user support functions to adjust the amount of light, the color, and the color temperature.

In the state 910 of FIG. 9A, the wearable device may control all the external electronic devices selected by the user, based on an input related to the screen 911. In response to an input for any one of the visual objects 912, 913, 914, and 915 within the screen 911, the wearable device may request execution of a function mapped to a visual object selected by the input to the external electronic device. For example, when receiving an input for adjusting the amount of light based on the visual object 913, the wearable device may transmit signals indicating the amount of light adjusted by the input to external electronic devices (e.g., the external electronic device 121 and the external electronic device corresponding to the visual object 152) selected by the user. The external electronic devices may operate based on the signals to have the amount of light adjusted by the user.

In the state 910 of FIG. 9A, the wearable device may change the screen 911, based on identifying that the external electronic devices selected by the user are changed. For example, when the user additionally selects an external electronic device, the wearable device may cease displaying at least one of the visual objects 912, 913, 914, and 915 within the screen 911, based on functions applicable to the added external electronic device. For example, when the user excludes selection of a particular external electronic device, the wearable device may change the screen 911, based on functions commonly applicable to one or more external electronic devices finally selected by the user.

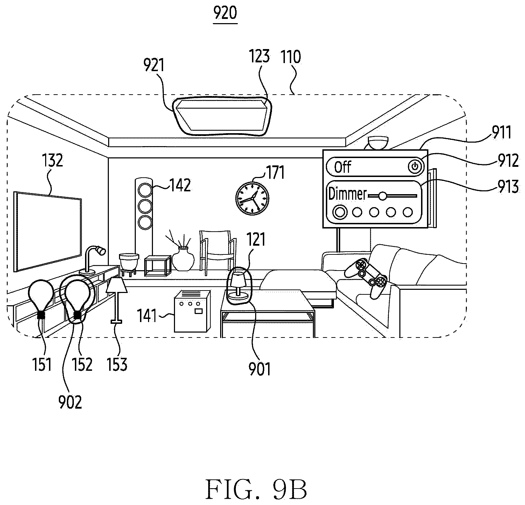

Referring to FIG. 9B, a state 920 in which the wearable device changes the screen 911 in response to an input indicating additional selection of an external electronic device 123 in the state 910 of FIG. 9A is exemplarily illustrated. In the state 920, in response to the input indicating selection of the external electronic device 123, the wearable device may display a visual object 921, superimposed on the external electronic device 123 viewable through the FoV 110. Each of the visual objects 901, 902, and 921 may be displayed as associated with the external electronic devices selected by the user. The wearable device may display the screen 911 based on functions commonly applicable to the external electronic devices corresponding to the visual objects 901, 902, and 921. As the number of the external electronic devices selected by the user increases, the number of the functions commonly applicable to the external electronic devices may decrease. The wearable device may change the screen 911 based on a change of the functions commonly applicable to the external electronic devices.

In an example of FIG. 9B, when the external electronic device 123 additionally selected by the user does not support adjusting the color and the color temperature, the wearable device may cease displaying the visual objects 914 and 915 for adjusting the color and color temperature within the screen 911. The wearable device may maintain displaying other visual objects 912 and 913 different from the visual objects 914 and 915 within the screen 911, independently of ceasing the display of the visual objects 914 and 915. For example, the wearable device may display the visual object 913 for adjusting the amount of light, and the visual object 912 for control the power of external electronic devices corresponding to the visual objects 901, 902, and 921.

As described above, the wearable device according to an embodiment may display a visual object (e.g., the visual objects 913, 914, and 915) for execution of other functions commonly applicable to the external electronic devices, in addition to a function of collectively turning on or off external electronic devices selected by the user, such as the visual object 912. Since the wearable device lists functions commonly applicable to the external electronic devices based on metadata and/or categories of the external electronic devices, collective control of the external electronic devices by the user of the wearable device.

Hereinafter, an example of an operation in which a wearable device according to an embodiment processes information received from external electronic devices selected by a user will be described with reference to FIGS. 10A to 10C.

FIGS. 10A to 10C illustrate an example of a screen in which a wearable device according to an embodiment displays based on external electronic devices selected by a user. The wearable device 101 of FIG. 1 may include the wearable device of FIGS. 10A to 10C. The wearable device of FIGS. 10A to 10C may be an example of the wearable device of FIGS. 2 to 4, 5A to 5C, and 9A to 9B, and/or the wearable device 101 of FIGS. 6A to 6B, 7A to 7B, and 8A to 8C.

A state 1010 of FIG. 10A may be an exemplary state in which the wearable device displays a screen 1011 based on an input indicating selection of external electronic devices 141 and 142 for providing a function related to air. In the state 1010, the wearable device may display the screen 1011 for interacting with the external electronic devices 141 and 142 selected by the input, within the FoV 110. The wearable device may display a visual object 1012 including a button for collectively turning on or off the external electronic devices 141 and 142 selected by the input, within the screen 1011.

The wearable device according to an embodiment may obtain data measured from each of the external electronic devices 141 and 142, in response to the input indicating the selection of the external electronic devices 141 and 142. The wearable device may display data obtained from the external electronic devices 141 and 142 within the screen 1011. For example, the wearable device may display visual objects 1014 and 1015 indicating data (e.g., air quality) measured from the external electronic device 141, which is an air cleaner, within the screen 1011. An example in which the wearable device displays the visual objects 1014 and 1015 indicating air quality measured at two points from the external electronic device 141 is illustrated, but an embodiment is not limited thereto.

The wearable device according to an embodiment may display a combination of data measured in each of the external electronic devices 141 and 142, within the screen 1011. For example, the wearable device may display a visual object 1013 indicating a combination of power consumption within the screen 1011, based on receiving the data indicating the power consumption of each of the external electronic devices 141 and 142. Referring to FIG. 10A, the wearable device may display the combination of the power consumption of the external electronic devices 141 and 142, based on a unit of a power usage such as a watt. An embodiment is not limited thereto, and for example, the wearable device may output the combination of the power consumption in a form of an electricity bill (e.g., "7,950 KRW" within the visual object 1013).

An operation in which the wearable device performs based on an input indicating selection of a plurality of external electronic devices is not limited to the collective control of the external electronic devices described above or visualization of the data received from the external electronic devices. The wearable device may display a visual object for executing a collaborative function of the plurality of external electronic devices selected by the user. For example, the collaborative function may be executed based on individual control of the plurality of external electronic devices.

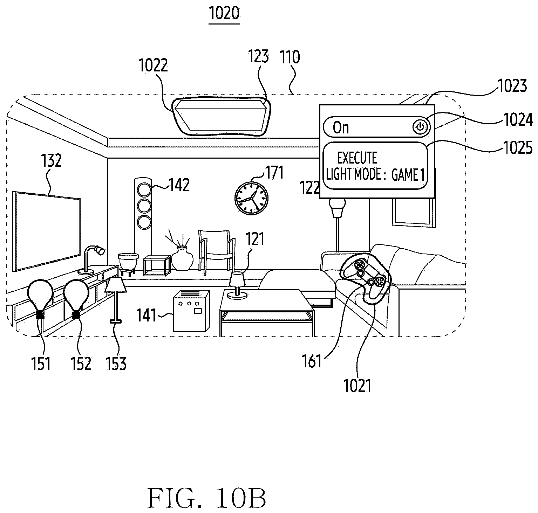

A state 1020 of FIG. 10B illustrates a state in which the wearable device displays a screen 1023, based on an input indicating selection of an external electronic device 123 that is lighting equipment and an external electronic device 161 that is a game pad. In the state 1020, in response to the input, the wearable device may display the visual objects 1021 and 1022, as associated with each of the external electronic devices 123 and 161. In the state 1020, the wearable device may display the screen 1023 for visualizing functions commonly applicable to the external electronic devices 123 and 161 selected by the input. The wearable device may display a visual object 1025 to execute a function assigned to a group of the external electronic devices 123 and 161 together with a visual object 1024 for collectively turning on or off the external electronic devices 123 and 161, within the screen 1023.

For example, the wearable device may display the visual object 1025, which is related to all the external electronic devices 123 and 161 selected by an input and is for individually controlling the external electronic devices 123 and 161, within the screen 1023. Referring to FIG. 10B, the wearable device may display the visual object 1025 for executing a function of controlling light of the external electronic device 123 that is lighting equipment, based on the external electronic device 161 that is a game pad. In response to an input indicating selection of the visual object 1025, the wearable device may transmit information for controlling the external electronic device 123 to the external electronic device 161.

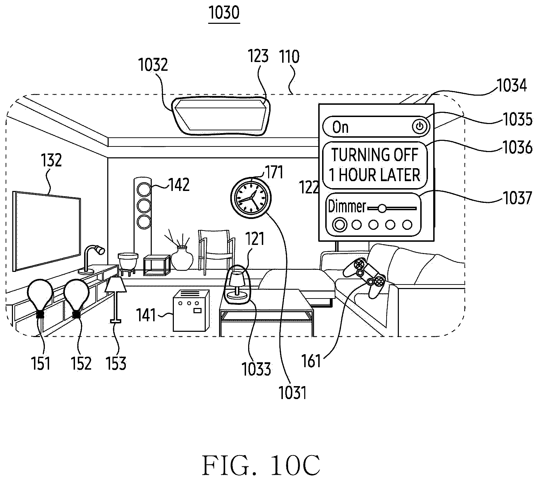

Referring to FIG. 10C, an exemplary state 1030 in which the wearable device displays a screen 1034 is illustrated based on an input indicating selection of external electronic devices 121, 123, and 171. In the state 1030, the wearable device may emphasize the external electronic devices 121, 123 and 171 selected by the input, based on visual objects 1031, 1032, and 1033 superimposed on the external electronic devices 121, 123 and 171 viewable through the FoV 110. In the state 1030, the wearable device may display visual objects 1036 and 1037 for executing a function (e.g., reservation lights off) assigned to a group of the external electronic devices 121, 123, and 171, together with the visual object 1035 for collectively controlling activation of the external electronic devices 121, 172, and 171 selected by the input. For example, in response to an input indicating selection of the visual object 1036, the wearable device may execute a function of controlling another external electronic device (e.g., the external electronic devices 121 and 123) included in the group, within a time section identified by the external electronic device 171 that is a watch. For example, in response to an input indicating selection of the visual object 1037, the wearable device may execute a function of controlling the amount of light of the external electronic devices 121 and 123, within the time section identified by the external electronic device 171.

An operation in which the wearable device according to an embodiment controls external electronic devices selected by the user is not limited to the above-described embodiment. For example, the wearable device may display a state of charge (SOC) of a battery included in each of the external electronic devices individually or in combination, based on an input selecting external electronic devices including the battery. In an embodiment of FIGS. 1A to 1B, in response to an input indicating selection of the external electronic device 131 that is a surveillance camera and the external electronic device 132 that is a television, the wearable device may display a visual object for executing a function for displaying an image and/or a video obtained by the external electronic device 131 based on the external electronic device 132. When a function commonly applicable to external electronic devices selected by the user is not identified, the wearable device may display a message indicating that there is no function commonly applicable to the external electronic devices, within the FoV 110.

Hereinafter, an operation of the wearable device described above will be described based on exemplary flowcharts with reference to FIGS. 11 to 15.

FIG. 11 illustrates an example of a flowchart for describing an operation of a wearable device according to an embodiment. The wearable device of FIG. 11 may include the wearable device described based on the above-described drawings. For example, operations of FIG. 11 may be performed by the wearable device 101 of FIGS. 1 to 2 and/or the processor 210 of FIG. 2.

Referring to FIG. 11, in operation 1110, the wearable device according to an embodiment may identify an input indicating selection of at least one of a plurality of external electronic devices. The wearable device may identify an external electronic device, based on metadata received from a server and/or an external electronic device. The wearable device may establish a communication link for transmitting and/or receiving a signal with an external electronic device based on the metadata. The wearable device may identify the input based on the motion of the user wearing the wearable device described above with reference to FIGS. 6A and 6B. The wearable device may identify the input based on the user's speech and/or the user's motion described above with reference to FIGS. 7A and 7B.

In response to the input of operation 1110, in operation 1115, the wearable device according to an embodiment may determine whether two or more external electronic devices have been selected by the input. Based on the operation 1110, when receiving an input indicating selection of one external electronic device (1115-No), in operation 1120, the wearable device according to an embodiment may display a screen for interacting with the external electronic device selected by the input of the operation 1110. For example, like the screen 534 of FIG. 5C, the wearable device may display a screen for controlling one external electronic device selected by the input within a FoV (e.g., the FoV 110 of FIGS. 1A to 1B) of the wearable device.

When receiving an input indicating selection of a plurality of external electronic devices based on the operation 1110 (1120-Yes), in operation 1125, the wearable device according to an embodiment may identify a category including all of two or more external electronic devices selected by the input. The wearable device may identify categories including each of external electronic devices based on metadata on the external the electronic devices selected by the input. Based on the categories and/or a higher category of the categories, the wearable device may identify a category including all the external electronic devices selected by the input.

Referring to FIG. 11, in operation 1130, the wearable device according to an embodiment may display one or more visual objects for distinguishing external electronic devices included in the category of the operation 1125, from among a plurality of external electronic devices. The one or more visual objects may be displayed as associated with the external electronic devices included in the category of the operation 1125, within the FoV of the wearable device. The one or more visual objects may include visual objects for indicating selection of the external electronic devices by the input of the operation 1110, such as the visual objects 815 and 821 of FIG. 8B. The one or more visual objects may include at least one visual object for indicating an external electronic device similar to the external electronic devices selected by the user, such as the visual objects 822, 823, and 825 of FIG. 8B.

Referring to FIG. 11, in operation 1135, the wearable device according to an embodiment may display a screen based on functions commonly applicable to the two or more external electronic devices selected by the input of the operation 1110. The functions commonly applicable to the external electronic devices selected by the input may be identified based on metadata of the external electronic devices and/or categories including the external electronic devices. For example, the screen may include the screens 911 and 921 of FIGS. 9A to 9B and/or the screens 1011, 1023, and 1034 of FIGS. 10A to 10C. In response to an input related to the screen, the wearable device may comprehensively control the external electronic devices selected by the input of the operation 1110.

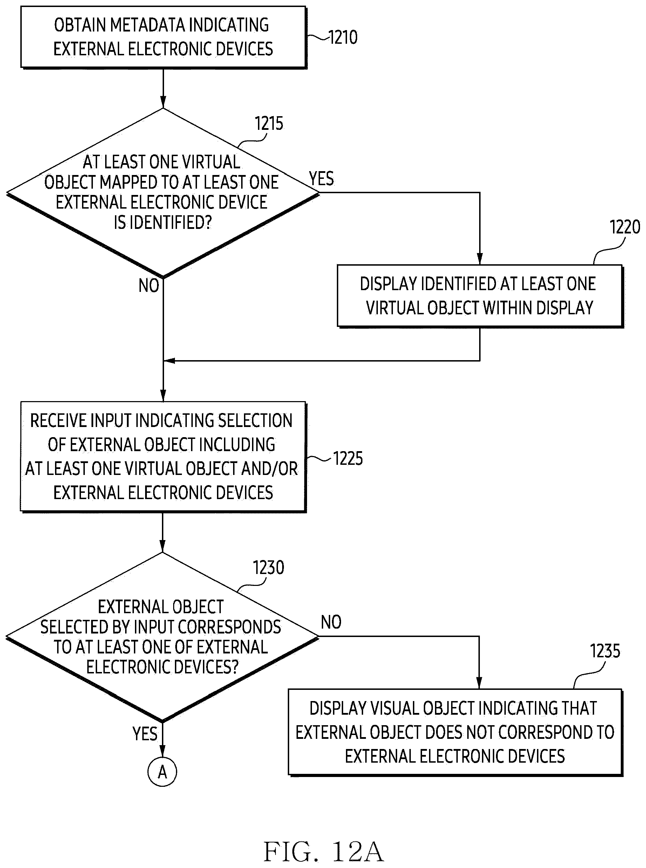

FIGS. 12A to 12B illustrate an example of a flowchart for describing an operation of a wearable device according to an embodiment. The wearable device of FIGS. 12A to 12B may include the wearable device described based on the above-described drawings. For example, operations of FIGS. 12A to 12B may be performed by the wearable device 101 of FIGS. 1 to 2 and/or the processor 210 of FIG. 2. The operations of FIGS. 12A to 12B may be related to the operations of FIG. 11.

Referring to FIG. 12A, in operation 1210, the wearable device according to an embodiment may obtain metadata indicating external electronic devices. The wearable device may obtain the metadata through a server connected to the wearable device. The wearable device may obtain the metadata based on direct communication between an external electronic device and the wearable device. The metadata may include information for classifying external electronic devices based on the hierarchical categories described above with reference to FIG. 4.

Referring to FIG. 12A, in operation 1215, the wearable device according to an embodiment may determine whether at least one virtual object mapped to at least one external electronic device is identified. When identifying the at least one virtual object (1215-Yes), in operation 1220 of FIG. 12A , the wearable device according to an embodiment may display the identified at least one virtual object within the display. The at least one virtual object may include the visual objects 151, 152, and 153 of FIG. 1B. When not identifying the at least one virtual object (1215-No), the wearable device may bypass a display of at least one virtual object based on the operation 1220.

Referring to FIG. 12A, in operation 1225, the wearable device according to an embodiment may determine whether an input indicating selection of an external object including at least one virtual object and/or external electronic devices is received. The input received based on the operation 1225 of FIG. 12A may include the input of the operation 1110 of FIG. 11. Referring to FIG. 12A, in operation 1230, the wearable device according to an embodiment may determine whether the external object selected by the input corresponds to at least one of external electronic devices. For example, the wearable device may determine whether the external object selected by the input is the external electronic device indicated by the metadata of the operation 1210. For example, the wearable device may determine whether the external object selected by the input corresponds to the displayed virtual object based on the operation 1220. When the external object selected by the input does not correspond to any external electronic device (1230-No), in operation 1235 of FIG. 12A, the wearable device according to an embodiment may display a visual object indicating that the external object does not correspond to external electronic devices. In the operation 1235 of FIG. 12A, the wearable device may display a screen for identifying the external object selected by the input as an external electronic device.

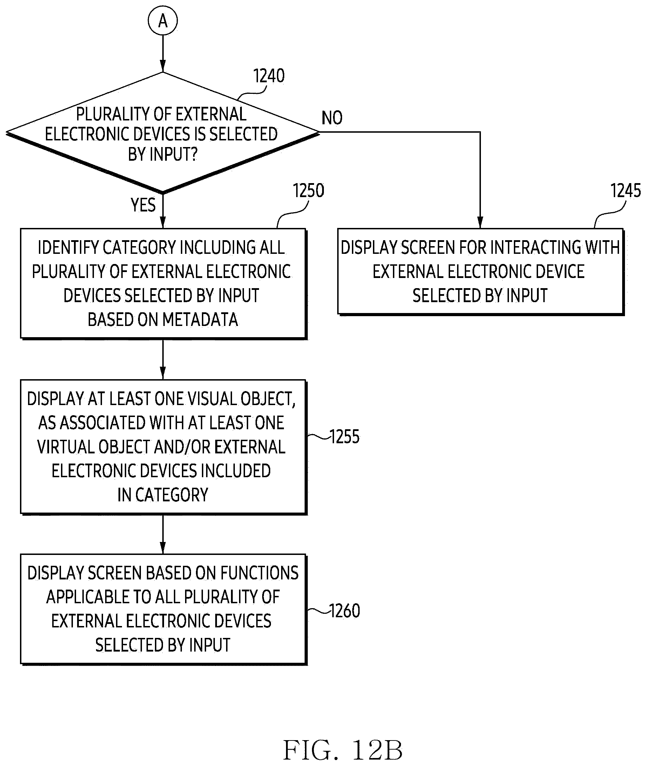

When the external object selected by the input corresponds to at least one of the external electronic devices (1230-Yes), in operation 1240 of FIG. 12B, the wearable device according to an embodiment may determine whether a plurality of external electronic devices is selected by the input. The operation 1240 of FIG. 12B may be performed similar to the operation 1115 of FIG. 11. When one external electronic device is selected by the input (1240-No), in operation 1245, the wearable device according to an embodiment may display a screen for interacting with the external electronic device selected by the input. The operation 1245 of FIG. 12B may be performed similar to the operation 1120 of FIG. 11.

When a plurality of external electronic devices is selected by the input (1240-Yes), in operation 1250 of FIG. 12B, the wearable device according to an embodiment may identify a category including all the plurality of external electronic devices selected by the input, based on metadata. Identifying the category may be performed similar to the operation 1125 of FIG. 11. The category identified by the wearable device based on the operation 1250 may further include another external electronic device connected to the wearable device, as well as the plurality of external electronic devices selected by the input.

Referring to FIG. 12B, in operation 1255, the wearable device according to an embodiment may display at least one virtual object, as associated with the at least one visual object and/or the external electronic devices included in the category. For example, the wearable device may display the at least one visual object, superimposed on the virtual object and/or the external electronic device selected by the input of the operation 1225. Since the category identified based on the operation 1250 further includes another external electronic devices connected to the wearable device as well as the plurality of external electronic devices selected by the input of the operation 1225, the wearable device may further display a visual object indicating the other external electronic devices. The operation 1255 of FIG. 12B may be performed similarly to the operation 1130 of FIG. 11.

Referring to FIG. 12B, in operation 1260, the wearable device according to an embodiment may display a screen based on functions applicable to all the plurality of external electronic devices selected by the input. The functions displayed on the screen may be identified based on the category of the operation 1125. The operation 1260 of FIG. 12B may be performed similarly to the operation 1135 of FIG. 11.

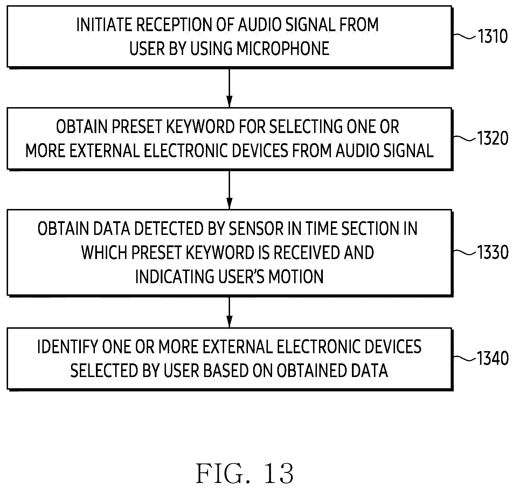

FIG. 13 illustrates an example of a flowchart for describing an operation of a wearable device according to an embodiment. The wearable device of FIG. 13 may include the wearable device described based on the above-described drawings. For example, operations of FIG. 13 may be performed by the wearable device 101 of FIGS. 1 to 2 and/or the processor 210 of FIG. 2. The operations of FIG. 13 may be related to the operations of FIGS. 11, and 12A to 12B. The operations of FIG. 13 are not inextricably linked to the operations of FIGS. 11, and 12A to 12B.

Referring to FIG. 13, in operation 1310, the wearable device according to an embodiment may initiate a reception of an audio signal from a user by using a microphone (e.g., the microphone 270 of FIG. 2). For example, the wearable device may initiate the reception of the audio signal based on a preset keyword notifying a start of a voice command, such as the keyword received through the time section 722 of FIG. 7B. Initiating the reception of the audio signal based on the operation 1310 by the wearable device may include an operation of initiating obtainment of text that indicates a speech included in the audio signal.

Referring to FIG. 13, in operation 1320, the wearable device according to an embodiment may obtain a preset keyword for selecting one or more external electronic devices from the audio signal. The preset keyword may include a demonstrative pronoun (e.g., "this" and/or "that") for selecting a single external electronic device, or a demonstrative pronoun (e.g., "all of these," "these," and/or "those") for selecting a plurality of external electronic devices.

Referring to FIG. 13, in operation 1330, the wearable device according to an embodiment may obtain data, which is detected by a sensor (e.g., the sensor 260 of FIG. 2) in a time section in which the preset keyword of the operation 1320 is received, and indicates the user's motion. For example, the wearable device may obtain data indicating the user's gaze (e.g., an image capturing the user's eyes). For example, the wearable device may detect a motion of the user's head wearing the wearable device based on data indicating a motion of the wearable device.

Referring to FIG. 13, in operation 1340, the wearable device according to an embodiment may identify one or more external electronic devices selected by the user, based on the data obtained based on the operation 1330. Referring to the operations 1320 and 1330 of FIG. 13, the wearable device may receive an input indicating selection of one or more external electronic devices, based on the motion performed by the user, within a time section in which the user speeches the preset keyword of the operation 1320. The input may correspond to the input of the operation 1110 of FIG. 11 and/or the input of the operation 1225 of FIG. 12A. For example, the wearable device may perform at least one of the operations 1120, 1125, 1130, and 1140 of FIG. 11, based on the one or more external electronic devices selected based on the operation 1340. For example, the wearable device may perform at least one of the operations 1230, 1235, 1240, 1245, 1250, 1255, and 1260 of FIGS. 12A to 12B, based on the one or more external electronic devices selected based on the operation 1340.

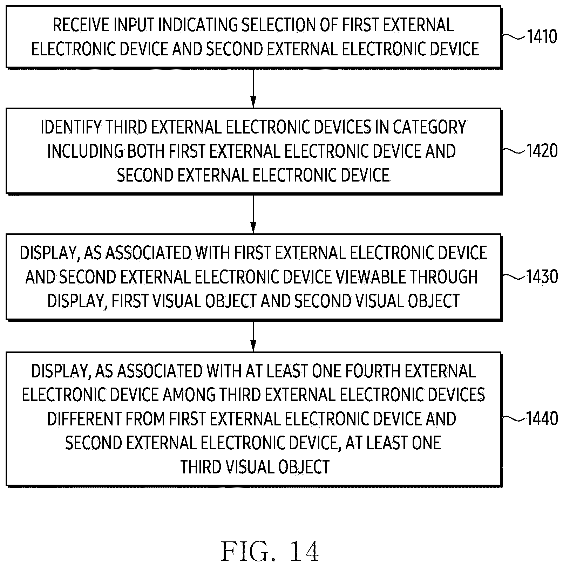

FIG. 14 illustrates an example of a flowchart for describing an operation of a wearable device according to an embodiment. The wearable device of FIG. 14 may include the wearable device described based on the above-described drawings. For example, operations of FIG. 14 may be performed by the wearable device 101 of FIGS. 1 to 2 and/or the processor 210 of FIG. 2. The operations of FIG. 14 may be related to the operations of FIGS. 11, and 12A to 12B.

Referring to FIG. 14, in operation 1410, the wearable device according to an embodiment may receive an input indicating selection of a first external electronic device and a second external electronic device. The input of FIG. 14 may include the input of the operation 1110 of FIG. 11 and/or the input of the operation 1225 of FIG. 12A.

Referring to FIG. 14, in operation 1420, the wearable device according to an embodiment may identify third external electronic devices in a category including both the first external electronic device and the second external electronic device. The third external electronic devices may include the first external electronic device and the second external electronic device of the operation 1410. For example, the wearable device may identify a first category into which the first external electronic device is classified, from first metadata on the first external electronic device. The wearable device may identify a second category into which the second external electronic device is classified, from second metadata on the second external electronic device. The wearable device may identify the third external electronic devices, based on a higher category including the first category and the second category. The operation 1420 of FIG. 14 may be related to the operation 1125 of FIG. 11 and/or the operation 1250 of FIG. 12B.

Referring to FIG. 14, in operation 1430, the wearable device according to an embodiment may display, as associated with the first external electronic device and the second external electronic device viewable through a display (e.g., the display 230 of FIG. 2), a first visual object and a second visual object. In response to the input of the operation 1410, the wearable device may perform the operation 1430. The wearable device may display the first visual object and the second visual object by superimposing with each of the first external electronic device and the second external electronic device viewable through the display.

Referring to FIG. 14, in operation 1440, the wearable device according to an embodiment may display, as associated with at least one fourth external electronic device different from the first external electronic device and the second external electronic device among the third external electronic devices, at least one third visual object. The at least one fourth external electronic device may be another external electronic device excluding the first external electronic device and the second external electronic device from among the third external electronic devices. The at least one third visual object may have a different shape and/or a color from the first visual object and the second visual object of the operation 1430. For example, the wearable device may guide selection of an external electronic device (e.g., the at least one fourth external electronic device) similar to the first external electronic device and the second external electronic device selected by the input of the operation 1410, based on the third visual object of the operation 1440. At least one of the operations 1420, 1430, and 1440 of FIG. 14 may be related to the operation 1130 of FIG. 11 and/or the operation 1225 of FIG. 12A.

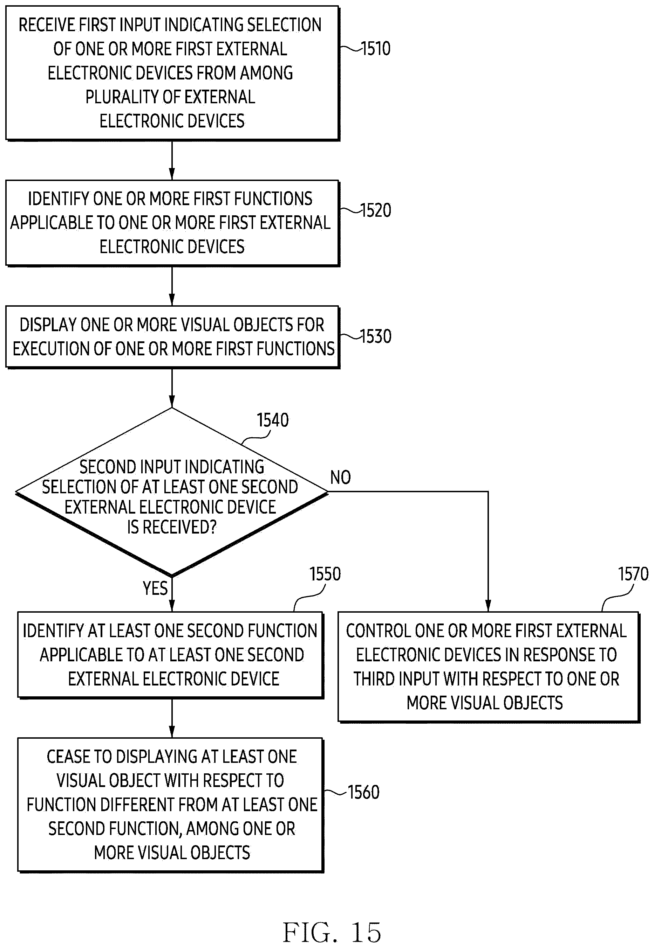

FIG. 15 illustrates an example of a flowchart for describing an operation of a wearable device according to an embodiment. The wearable device of FIG. 15 may include the wearable device described based on the above-described drawings. For example, operations of FIG. 15 may be performed by the wearable device 101 of FIGS. 1 to 2 and/or the processor 210 of FIG. 2. The operations of FIG. 15 may be related to the operations of FIGS. 11, and 12A to 12B.

Referring to FIG. 15, in operation 1510, the wearable device according to an embodiment may receive a first input indicating selection of one or more first external electronic devices from among a plurality of external electronic devices. The first input may be received based on identification of a user's motion and/or the user's speech by the wearable device, similar to the input of the operation 1110 of FIG. 11 and the input of the operation 1225 of FIG. 12A.

Referring to FIG. 15, in operation 1520, the wearable device according to an embodiment may identify one or more first functions applicable to the one or more first external electronic devices. The first functions may be identified based on a category including all the one or more first external electronic devices. The wearable device may identify the first functions based on metadata on the one or more first external electronic devices.

Referring to FIG. 15, in operation 1530, the wearable device according to an embodiment may display one or more visual objects for execution of the one or more first functions. The wearable device may display the one or more visual objects within an area of a display, such as the screen 911 of FIG. 9A. The wearable device according to an embodiment may display the one or more visual objects, by using another portion excluding a portion of the display in which the one or more first external electronic devices selected by the first input of the operation 1510 are viewed.

While displaying the one or more visual objects of the operation 1530, in operation 1540, the wearable device according to an embodiment may determine whether a second input indicating selection of at least one second external electronic device is received. The at least one second external electronic device may be different from the one or more first external electronic devices of the operation 1510. When not receiving the second input (1540-No), in operation 1570, the wearable device may control the one or more first external electronic devices, in response to a third input with respect to one or more visual objects. Before receiving the second input, the wearable device may maintain displaying the one or more visual objects for execution of the one or more first functions, based on the operation 1530.

When receiving the second input indicating the selection of the at least one second external electronic device (1540-Yes), in operation 1550, the wearable device according to an embodiment may identify at least one second function applicable to the at least one second external electronic device. Identifying the at least one second function by the wearable device may be performed based on metadata on the at least one second external electronic device, and/or a category including the at least one second external electronic device, similar to the operation 1520.

Referring to FIG. 15, in operation 1560, the wearable device according to an embodiment may cease a display of at least one visual object with respect to a function different from the at least one second function, among one or more visual objects. For example, a display of at least one visual object different from the at least one second function of the operation 1550 among the one or more visual objects displayed within the display based on the operation 1530 may ceased by the wearable device. The display of at least one visual object for execution of the at least one second function of operation 1550 among the one or more visual objects of the operation 1530 may be maintained by the operation 1560.

As described above, the wearable device according to an embodiment may guide selection of homogeneous external electronic devices among a plurality of external electronic devices connected to the wearable device. In response to an input indicating selection of a plurality of external electronic devices, the wearable device may recommend another external electronic device similar to the plurality of external electronic devices to the user. The wearable device may display a screen for execution of one or more functions commonly applicable to the plurality of external electronic devices in response to the input.

According to an embodiment, a method of a wearable device for providing a user interface to select at least one function applicable to a plurality of external electronic devices may be required.

As described above, the wearable device 101 may comprise a display 230 and a processor 210. The processor may be configured to receive an input indicating selection of a first external electronic device, and a second external electronic device among a plurality of external electronic devices viewable through the display. The processor may be configured to, in response to the input, identify third external electronic devices in a category including both the first external electronic device, and the second external electronic device. The third external electronic devices may be configured to include the first external electronic device and the second external electronic device. The processor may be configured to display, as associated with the first external electronic device and the second external electronic device viewable through the display, a first visual object and a second visual object (e.g., the visual objects 815 and 821) respectively indicating that the first external electronic device and the second external electronic device are selected. The processor may be configured to display, as associated with at least one fourth external electronic device among the third external electronic devices that is different from the first external electronic device and the second external electronic device, at least one third visual object (e.g., the visual objects 822, 823, and 825) guiding selection of the at least one fourth external electronic device. The processor may display the first visual object and the second visual object by superimposing on the first external electronic device and the second external electronic device viewable through the display. The wearable device according to an embodiment may provide a user with a UI (e.g., the screens 534, 911, 1011, 1023, and 1034) for executing functions commonly applicable to external electronic devices selected by the user. The wearable device according to an embodiment may provide a user interface for selecting at least one function applicable to the plurality of external electronic devices.

For example, the processor may be configured to, in response to the input, identify a first category of the first external electronic device and a second category of the second external electronic device, from first metadata with respect to the first external electronic device and second metadata with respect to the second external electronic device. For example, the processor may be configured to, based on the first category and the second category, display executable objects to control the first external electronic device and the second external electronic device.

For example, the processor may be configured to identify one or more functions commonly included in a first set of functions applicable to an external electronic device in the first category, and a second set of functions applicable to an external object in the second category. The processor may be configured to display, within the display, the executable objects to execute the one or more functions.

For example, the processor may be configured to, based on identifying the second category different from the first category, identify the category where the third external electronic devices are included, based on a higher category of each of the first category of the first external electronic device and the second category of the second external electronic device.

For example, the wearable device may further comprise communication circuitry 250. The processor may be configured to obtain, through the communication circuitry, metadata indicating functions applicable to each of a plurality of external electronic devices and including the first metadata and the second metadata.

For example, the input may be a first input. The processor may be configured to, in response to a second input indicating selection of one object among the executable objects, request, to the first external electronic device and the second external electronic device, execution of a function mapped to the object selected by the second input.

For example, the processor may be configured to, in response to the input, receive first data obtained by the first external electronic device and second data obtained by the second external electronic device. The processor may be configured to display, on the display, a fourth visual object based on a combination of the first data and the second data.

For example, the input may be a first input. The processor may be configured to, in response to a second input indicating selection of the at least one of the third visual object, identify one or more functions applicable to all of the third external electronic devices. The processor may be configured to display, within the display, one or more fourth visual objects to execute the one or more functions.

For example, the wearable device may comprise a sensor 260 to track an eye gaze of a user wearing the wearable device. The wearable device may comprise a microphone 270 to receive an audio signal. The processor may be configured to identify a preset keyword 716 from the audio signal received by the microphone. The processor may be configured to, in response to identifying the preset keyword, receive the input based on the eye gaze detected by the sensor and a time section 724 in which the preset keyword is identified.

For example, the processor may be configured to, based on identifying another keyword received after the preset keyword from the audio signal, request, to the first external electronic device and the second external electronic device, execution of a function indicated by the other keyword.

As described above, a method of a wearable device 101 may comprise an operation 1510 of receiving a first input indicating selection of one or more first external electronic devices among a plurality of external electronic devices viewable through the display. The method may comprise an operation 1520 of identifying, in response to the first input, one or more first functions applicable to the one or more first external electronic devices. The method may comprise an operation 1530 of displaying, within the display, one or more visual objects for executing the one or more first functions. The method may comprise an operation 1550 of identifying, in a state that the one or more visual objects are displayed, in response to a second input indicating selection of at least one second external electronic device, at least one second function applicable to the at least one second external electronic device. The method may comprise an operation 1560 of ceasing to, among the one or more visual objects, displaying at least one visual object with respect to a function different from the at least one second function. The wearable device according to an embodiment may provide a UI responding to a change in a user's selection with respect to the external electronic devices.

For example, identifying the one or more first functions may include receiving, through communication circuitry of the wearable device, metadata with respect to the one or more first external electronic devices. The Identifying the one or more first functions may include identifying, based on the received metadata, the one or more first functions.

For example, identifying the one or more first functions may include, based on the received metadata, identifying a category including all the one or more first external electronic devices. The identifying the one or more first functions may include, based on the identified category, identifying the one or more first functions.

For example, displaying the one or more visual objects may include receiving a third input indicating selection of one of the one or more visual objects. The displaying the one or more visual objects may include, in response to the third input, requesting to the one or more first external electronic devices to execute a function corresponding to a visual object selected by the third input from among the one or more first functions.

For example, the method may include, based on the at least one second function identified, in response to the second input, maintaining displaying of at least one visual object corresponding to the at least one second function.

For example, displaying one or more visual objects may include displaying a first visual object to adjust power of the one or more first external electronic devices. The displaying the one or more visual objects may include displaying one or more second visual objects, which corresponds to the one or more first functions applicable to all of the first external electronic devices and is different from the first visual object.

For example, receiving the first input may include identifying a preset keyword from the audio signal identified through the microphone of the wearable device. The receiving the first input may include identifying a motion of a user wearing the wearable device by using a sensor of the wearable device in a time section in which the preset keyword is identified. The receiving the first input may include selecting the one or more first external electronic devices from among the plurality of external electronic devices based on the identified motion.

As described above, a method of a wearable device 101 may comprise an operation 1410 of receiving an input indicating selection of a first external electronic device, and a second external electronic device among a plurality of external electronic devices viewable through a display of the wearable device. The method may comprise an operation 1420 of identifying, in response to the input, third external electronic devices in a category including both the first external electronic device, and the second external electronic device. The third external electronic devices may include the first external electronic device, and the second external electronic device. The method may comprise an operation 1430 of displaying, as associated with the first external electronic device and the second external electronic device viewable through the display, a first visual object and a second visual object respectively indicating that the first external electronic device and the second external electronic device are selected. The method may comprise an operation 1440 of displaying, as associated with at least one fourth external electronic device among the third external electronic devices that is different from the first external electronic device and the second external electronic device, at least one third visual object guiding selection of the at least one fourth external electronic device.

For example, the method may comprise, in response to the input, identifying a first category of the first external electronic device and a second category of the second external electronic device, from first metadata with respect to the first external electronic device and second metadata with respect to the second external electronic device. The method may comprise, based on the first category and the second category, displaying executable objects to control the first external electronic device and the second external electronic device.

For example, displaying the executable objects may comprise identifying one or more functions commonly included in a first set of functions applicable to an external electronic device in the first category, and a second set of functions applicable to an external object in the second category. The displaying the executable objects may comprise displaying, within the display, the executable objects to execute the one or more functions.

For example, the displaying the executable objects may comprise, based on identifying the second category different from the first category, identifying the category where the third external electronic devices are included, based on a higher category of each of the first category of the first external electronic device and the second category of the second external electronic device. The displaying the executable objects may comprise, based on identifying the category that the third external electronic devices are included, displaying the executable objects based on the identified category.

For example, the displaying the executable objects may comprise, in response to a second input indicating selection of one object among the executable objects, requesting, to the first external electronic device and the second external electronic device, execution of a function mapped to the object selected by the second input, wherein the second input is different from the input that is the first input.

For example, the method may include, in response to the input, receiving first data obtained by the first external electronic device and second data obtained by the second external electronic device. The method may include displaying, on the display, a fourth visual object based on a combination of the first data and the second data.

For example, displaying the at least one third visual object may include, in response to a second input indicating selection of the at least one of the third visual object, identifying one or more functions applicable to all of the third external electronic devices. The displaying the at least one third visual object may include displaying, within the display, one or more fourth visual objects to execute the one or more functions.

For example, receiving the input may include identifying a preset keyword from the audio signal received by the microphone. The receiving the input may include, in response to identifying the preset keyword, receiving the input based on the eye gaze detected by the sensor and a time section in which the preset keyword is identified.

For example, the receiving the input may include, based on identifying another keyword received after the preset keyword from the audio signal, requesting, to the first external electronic device and the second external electronic device, execution of a function indicated by the other keyword.

As described above, a wearable device 101 according to an embodiment may comprise a display 230 and a processor 210. The processor may be configured to receive a first input indicating selection of one or more first external electronic devices among a plurality of external electronic devices viewable through the display. The processor may be configured to, in response to the first input, identify one or more first functions applicable to the one or more first external electronic devices. The processor may be configured to display, within the display, one or more visual objects for executing the one or more first functions. The processor may be configured to, in a state that the one or more visual objects are displayed, identify, in response to a second input indicating selection of at least one second external electronic device, at least one second function applicable to the at least one second external electronic device. The processor may be configured to cease to, among the one or more visual objects, displaying at least one visual object with respect to a function different from the at least one second function.

For example, the processor may be configured to receive, through communication circuitry of the wearable device, metadata with respect to the one or more first external electronic devices. The processor may be configured to identify, based on the received metadata, the one or more first functions.

For example, the processor may be configured to, based on the received metadata, identify a category including all the one or more first external electronic devices. The processor may be configured to, based on the identified category, identify the one or more first functions.

For example, the processor may be configured to receive a third input indicating selection of one of the one or more visual objects. The processor may be configured to, in response to the third input, request to the one or more first external electronic devices to execute a function corresponding to a visual object selected by the third input from among the one or more first functions.

For example, the processor may be configured to, based on the at least one second function identified in response to the second input, maintain displaying of at least one visual object corresponding to the at least one second function.

For example, the processor may be configured to display a first visual object for adjusting power of the one or more first external electronic devices. The processor may be configured to display one or more second visual objects, which corresponds to the one or more first functions applicable to all of the first external electronic devices and is different from the first visual object.

For example, the wearable device may be configured to further include a sensor 260 and a microphone 270. The processor may be configured to identify a preset keyword from the audio signal identified through the microphone. The processor may be configured to identify a motion of a user wearing the wearable device by using the sensor in a time section in which the preset keyword is identified. The processor may be configured to select the one or more first external electronic devices from among the plurality of external electronic devices based on the identified motion.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. A wearable device, comprising:
a display; and
a processor,
wherein the processor is configured to:
receive an input indicating selection of a first external electronic device, and a second external electronic device among a plurality of external electronic devices viewable through the display;
in response to the input, identify third external electronic devices in a category including both the first external electronic device, and the second external electronic device, wherein the third external electronic devices include the first external electronic device, and the second external electronic device;
display, as associated with the first external electronic device and the second external electronic device viewable through the display, a first visual object and a second visual object respectively indicating that the first external electronic device and the second external electronic device are selected; and
display, as associated with at least one fourth external electronic device among the third external electronic devices that is different from the first external electronic device and the second external electronic device, at least one third visual object guiding selection of the at least one fourth external electronic device.

2. The wearable device of claim 1, wherein the processor is configured to:
in response to the input, identify a first category of the first external electronic device and a second category of the second external electronic device, from first metadata with respect to the first external electronic device and second metadata with respect to the second external electronic device; and
based on the first category and the second category, display executable objects to control the first external electronic device and the second external electronic device.

3. The wearable device of any one of the preceding claims, wherein the processor is configured to:
identify one or more functions commonly included in a first set of functions applicable to an external electronic device in the first category, and a second set of functions applicable to an external object in the second category; and
display, within the display, the executable objects to execute the one or more functions.

4. The wearable device of any one of the preceding claims, wherein the processor is configured to:
based on identifying the second category different from the first category, identify the category where the third external electronic devices are included, based on a higher category of each of the first category of the first external electronic device and the second category of the second external electronic device.

5. The wearable device of any one of the preceding claims, further comprising communication circuitry,
wherein the processor is configured to:
obtain, through the communication circuitry, metadata indicating functions applicable to each of a plurality of external electronic devices and including the first metadata and the second metadata.

6. The wearable device of any one of the preceding claims, wherein the input is a first input,
wherein the processor is configured to:
in response to a second input indicating selection of one object among the executable objects, request, to the first external electronic device and the second external electronic device, execution of a function mapped to the object selected by the second input.

7. The wearable device of any one of the preceding claims, wherein the processor is configured to:
in response to the input, receive first data obtained by the first external electronic device and second data obtained by the second external electronic device;
display, on the display, a fourth visual object based on a combination of the first data and the second data.

8. The wearable device of any one of the preceding claims, wherein the input is a first input,
wherein the processor is configured to:
in response to a second input indicating selection of the at least one of the third visual object, identify one or more functions applicable to all of the third external electronic devices; and
display, within the display, one or more fourth visual objects to execute the one or more functions.

9. The wearable device of any one of the preceding claims, further comprising,
a sensor to track an eye gaze of a user wearing the wearable device; and
a microphone to receive an audio signal,
wherein the processor is configured to:
identify a preset keyword from the audio signal received by the microphone; and
in response to identifying the preset keyword, receive the input based on the eye gaze detected by the sensor and a time section in which the preset keyword is identified.

10. The wearable device of any one of the preceding claims, wherein the processor is configured to:
based on identifying another keyword received after the preset keyword from the audio signal, request, to the first external electronic device and the second external electronic device, execution of a function indicated by the another keyword.

11. A method of a wearable device comprising:
receiving an input indicating selection of a first external electronic device, and a second external electronic device among a plurality of external electronic devices viewable through a display of the wearable device;
in response to the input, identifying third external electronic devices in a category including both the first external electronic device, and the second external electronic device, wherein the third external electronic devices include the first external electronic device, and the second external electronic device;
displaying, as associated with the first external electronic device and the second external electronic device viewable through the display, a first visual object and a second visual object respectively indicating that the first external electronic device and the second external electronic device are selected; and
displaying, as associated with at least one fourth external electronic device among the third external electronic devices that is different from the first external electronic device and the second external electronic device, at least one third visual object guiding selection of the at least one fourth external electronic device.

12. The method of claim 11, further comprising:
in response to the input, identifying a first category of the first external electronic device and a second category of the second external electronic device, from first metadata with respect to the first external electronic device and second metadata with respect to the second external electronic device;
based on the first category and the second category, displaying executable objects to control the first external electronic device and the second external electronic device.

13. The method of any one of the preceding claims, wherein the displaying the executable objects comprising:
identifying one or more functions commonly included in a first set of functions applicable to an external electronic device in the first category, and a second set of functions applicable to an external object in the second category;
displaying, within the display, the executable objects to execute the one or more functions.

14. The method of any one of the preceding claims, wherein the displaying the executable objects comprising:
based on identifying the second category different from the first category, identifying the category where the third external electronic devices are included, based on a higher category of each of the first category of the first external electronic device and the second category of the second external electronic device;
based on identifying the category that the third external electronic devices are included, displaying the executable objects based on the identified category.

15. The method of any one of the preceding claims, wherein the displaying the executable objects comprising:
in response to a second input indicating selection of one object among the executable objects, requesting, to the first external electronic device and the second external electronic device, execution of a function mapped to the object selected by the second input, wherein the second input is different from the input that is the first input.
